# EUROPÄISCHE PATENTSCHRIFT

(11) **EP 4 132 768 B1**
(45) Veröffentlichungstag und Bekanntmachung des Hinweises auf die Patenterteilung: **13.11.2024**
(21) Anmeldenummer: 21717376.4
(22) Anmeldetag: 01.04.2021
(51) Int. Cl.: B29C 64/118, B29C 64/209, B33Y 30/00

(54) **DRUCKVORRICHTUNG, VORZUGSWEISE 3D-DRUCKER**
PRINTING DEVICE, PREFERABLY A 3D PRINTER
DISPOSITIF D'IMPRESSION, DE PRÉFÉRENCE UNE IMPRIMANTE 3D

(30) Priorität: 08.04.2020 DE 102020109847
(43) Veröffentlichungstag der Anmeldung: 15.02.2023
(73) Patentinhaber: Liqtra GmbH, 21129 Hamburg (DE)
(72) Erfinder: HOCKE, Tristan, 22767 Hamburg (DE); GROSS, Lukas, 21629 Neu Wulmstorf (DE)
(74) Vertreter: Holz, Christian
(86) Internationale Anmeldenummer: PCT/EP2021/058639
(87) Internationale Veröffentlichungsnummer: WO 2021/204680

(56) Entgegenhaltungen:
- EP-B1- 3 740 372
- WO-A1-2017/206128

## Beschreibung

Die vorliegende Erfindung betrifft eine Druckvorrichtung, vorzugsweise einen 3D-Drucker, gemäß dem Oberbegriff des Patentanspruchs 1.

In der Fertigungstechnik ist es heutzutage neben z. B. dem Urformen, Umformen und Trennen bekannt, Werkstücke durch dreidimensionales Drucken (3D-Drucken) herzustellen. Der 3D-Druck kann auch z. B. als additive Fertigung bezeichnet werden. Unter 3D-Druck werden üblicherweise alle Fertigungsverfahren verstanden, bei denen Materialien Schicht für Schicht aufgetragen und so dreidimensionale Gegenstände als Werkstücke erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische und bzw. oder chemische Härtungs- oder Schmelzprozesse statt. Typische Werkstoffe für das 3D-Drucken sind Kunststoffe, Kunstharze, Keramiken und Metalle.

Vorteilhaft ist beim 3D-Druck, dass keine speziellen werkstückspezifischen Werkzeuge erforderlich sind, um das Werkstück in seiner jeweiligen Geometrie herzustellen, wie es z. B. beim Urformen mittels Gussformen erforderlich ist. Dies kann die Flexibilität der Herstellung erhöhen und insbesondere bei kleinen Stückzahlen die Herstellungskosten geringhalten sowie die Herstellung beschleunigen, da auf das Anfertigen einer werkstückspezifischen Gussform verzichtet werden kann. Insbesondere Muster, Prototypen und Unikate mit der Stückzahl eins der herzustellenden Werkstücke werden daher heutzutage gerne mittels 3D-Druck hergestellt.

Vorteilhaft ist auch, dass mittels des 3D-Drucks Werkstückgeometrien hergestellt werden können, welche mit anderen Fertigungsverfahren gar nicht möglich sind. Dies gilt insbesondere für Hinterschnitte und dergleichen.

Der 3D-Druck als allgemeiner Oberbegriff umfasst dabei verschiedene 3D-Druck-Technologien, welche sich nach der Art des Materialauftrags sowie der verwendbaren Materialien unterscheiden lassen. Zu diesen 3D-Druckverfahren gehört auch das Fused Deposition Modeling (FDM) bzw. die Schmelzschichtung, bei dem das Werkstück schichtweise aus einem schmelzfähigen Material wie z. B. aus Kunststoff oder aus Metall aufgebaut wird. Hierbei wird ein Raster von Punkten oder eine durchgehende Spur des Materials auf eine üblicherweise horizontale Arbeitsfläche aufgetragen, indem ein drahtförmiges Kunststoff- oder Wachsmaterial durch Erwärmung verflüssigt wird. Das drahtförmige Material wird einem Druckkopf zugeführt, dort durch Extrudieren erwärmt und verflüssigt und in flüssiger bzw. pastöser Form von einer Druckdüse des Druckkopfs in der vertikalen Richtung von oben auf die Arbeitsfläche eines Druckbetts aufgebracht.

Auf dem Druckbett erfolgt das Aushärten des Materials z. B. durch Abkühlung an der gewünschten Position der horizontalen Ebene des Druckbetts. Ist eine horizontale Ebene des Werkstücks auf diese Art und Weise hergestellt worden, so kann entweder der Druckkopf in der vertikalen Richtung nach oben oder die Arbeitsfläche in der vertikalen Richtung nach unten verfahren werden. Anschließend wird die nächste Ebene des Werkstücks wie zuvor beschrieben auf dem ausgehärteten Material der vorangehenden Ebene des Werkstücks aufgebracht. Dies wird für jede horizontale Ebene des Werkstücks wiederholt, so dass ein schichtweiser dreidimensionaler Aufbau des Werkstücks erfolgt.

Die EP 3 272 669 A1 betrifft eine Druckvorrichtung, umfassend eine Flüssigkeitsausstoßvorrichtung, die ausgebildet ist, eine Flüssigkeit, die in einer Aufnahmekammer enthalten ist, aus einer Ausstoßöffnung auszustoßen, die bei der Aufnahmekammer bereitgestellt ist. Die Flüssigkeit wird in einem Flüssigkeitsreservoir eines Versorgungsabschnitts bereitgestellt und mittels einer Flüssigkeitspumpe unter Druck über eine Leitung einer entsprechenden Einlassöffnung der Flüssigkeitsausstoßvorrichtung bzw. deren Aufnahmekammer zugeführt.

Die Flüssigkeitsausstoßvorrichtung umfasst ein Ventilelement, das ausgebildet ist, sich innerhalb der Aufnahmekammer zu der Ausstoßöffnung vertikal hin und her zu bewegen, um dadurch die Flüssigkeit aus der Ausstoßöffnung hinauszustoßen und dann die Ausstoßöffnung mit einem Spitzenteil zu blockieren, wobei die Aufnahmekammer mit einer Kommunikationsöffnung bereitgestellt ist, die ausgebildet ist, die Flüssigkeit, die durch Druck aus dem Versorgungsabschnitt zugeleitet wird, aufzunehmen, die an einer Position getrennt von der Ausstoßöffnung in einer Richtung von der Ausstoßöffnung zum Ventilelement angeordnet ist.

Mit anderen Worten kann bei einem 3D-Drucker gemäß der EP 3 272 669 A1 eine Flüssigkeit als fließfähiges Material bereitgestellt und von außen in eine Druckdüse als Flüssigkeitsausstoßvorrichtung der Druckvorrichtung gefördert sowie von dort vertikal nach unten ausgestoßen werden, wobei das Aussto-ßen durch die feststehende Ausstoßöffnung mittels einer Hin- und Herbewegung des Spitzenteils des Ventilelements im Inneren der Druckdüse zugelassen oder unterbrochen werden kann.

Nachteilig ist bei der Druckvorrichtung der EP 3 272 669 A1, dass das Unterbrechen des Ausstoßens der Flüssigkeit durch das Spitzenteil des Ventilelements zu einer Druckerhöhung innerhalb der Aufnahmekammer der Druckdüse führen kann. Wird nun die Ausstoßöffnung vom Spitzenteil des Ventilelements wieder freigegeben, um das Ausstoßen der Flüssigkeit wieder aufzunehmen, so kann das Ausstoßen der Flüssigkeit zumindest im ersten Moment mit einem entsprechend erhöhten Druck erfolgen und somit zu einem übermäßigen und bzw. oder ungleichmäßigen Ausstoß von Flüssigkeit führen. Bei einem 3D-Drucker kann dies zu einem übermäßigen Auftrag von Material auf der horizontalen Arbeitsfläche bzw. auf dem begonnenen Werkstück führen und dieses hierdurch in seiner Formgebung ungewollt verändern und sogar unbrauchbar machen.

Die EP 2 151 282 A1 betrifft eine grundsätzlich vergleichbare Druckvorrichtung, welche jedoch in der Druckdüse ein Ventilelement aufweist, welches durch eine seitliche Bewegung, d.h. eine Bewegung senkrecht zur Flussrichtung des auszustoßenden Materials, den Fluss des auszustoßenden Materials entweder nach unten der Ausstoßöffnung zuführen oder zurück nach oben in ein separates Reservoir leiten kann. Vergleichbare Druckvorrichtungen zeigen die EP 1 972 386 A1 und die JP 2005 296 700 A.

Hierdurch kann zwar vermieden werden, dass sich durch das Unterbrechen des Ausstoßens der Flüssigkeit ein Überdruck im Inneren der Druckdüse aufbaut, da die auszustoßende Flüssigkeit weiterhin strömen kann, wenn das Ausstoßen der Flüssigkeit nach außen unterbrochen ist. Nachteilig ist hierbei jedoch, dass während des Umschaltens der Flussrichtung der Flüssigkeit durch das seitlich verschiebbare Ventilelement der Druckdüse das Strömen der Flüssigkeit kurzzeitig unterbrochen wird. Hierdurch kann es dennoch zumindest kurzzeitig zu Druckschwankungen im Flüssigkeitsstrom innerhalb der Druckdüse kommen.

Die EP 3 300 889 A1 betrifft eine Druckvorrichtung, welche grundsätzlich mit der Druckvorrichtung der EP 3 272 669 A1 vergleichbar ist. Zusätzlich wird die Möglichkeit beschrieben, den Fluss der Flüssigkeit aus der Aufnahmekammer zurück zu dem Versorgungsabschnitt zu fördern, wenn das Spitzenteil des Ventilelements das Ausstoßen der Flüssigkeit verhindert. Hierdurch kann ein geschlossener Kreislauf der Flüssigkeit gebildet werden.

Die JP 2018 103 140 A betrifft eine Druckvorrichtung, welche grundsätzlich mit der Druckvorrichtung der EP 3 300 889 A1 vergleichbar ist, da auch hier die Flüssigkeit aus der Aufnahmekammer der Druckdüse wieder heraus und dem Versorgungsabschnitt zugeführt werden kann. Im Unterschied zur Druckvorrichtung der EP 3 300 889 A1 wird jedoch bei der Druckvorrichtung der JP 2018 103 140 A die Strömung der Flüssigkeit sowohl aus der Auslassöffnung der Druckdüse als auch in die Rückführung gemeinsam und gleichzeitig durch das Spitzenteil des Ventilelements unterbrochen und freigegeben.

Gemeinsam ist dabei allen zuvor beschriebenen Druckvorrichtungen, dass das Ausstoßen der Flüssigkeit aus der Auslassöffnung der Druckdüse des Druckkopfs stets durch ein bewegliches Element eines Ventilelements zugelassen oder verhindert wird, welches entweder vertikal innerhalb der Aufnahmekammer des Druckdüse oder horizontal zur Druckdüse beweglich ist. Die Ausstoßöffnung der Druckdüse ist jeweils feststehend am Druckkopf ausgebildet oder angeordnet und führt keinerlei Bewegung relativ zum Druckkopf aus, wenn die Auslassöffnung der Druckdüse vom Ventilelement geschlossen oder geöffnet wird.

Werden die zuvor beschriebenen Druckvorrichtungen als 3D-Drucker umgesetzt, so bedeutet dies, dass die Auslassöffnung der Druckdüse auch relativ zu der horizontalen Arbeitsfläche bzw. zu dem auf der horizontalen Arbeitsfläche schichtweise aufzubauenden Werkstück keinerlei Bewegung ausführt, wenn die Auslassöffnung der Druckdüse vom Ventilelement geschlossen oder geöffnet wird. Kommt es nun bei der Flüssigkeit in der Aufnahmekammer der jeweiligen Druckdüse zu Druckschwankungen und insbesondere zu Druckerhöhungen, kann dies jeweils dazu führen, dass zumindest kleinste aus der Auslassöffnung der Druckdüse austretende Mengen der Flüssigkeit ungewollt zum Druckbett bzw. zu dem auf dem Druckbett schichtweise aufzubauenden Werkstück gelangen und dessen schichtweisen Aufbau beeinflussen. Mit anderen Worten kann hierdurch die Struktur des aufzubauenden Werkstücks verändert und insbesondere vermehrt werden, was zumindest zu Qualitätseinbußen des aufzubauenden Werkstücks führen und dieses ggfs. unbrauchbar machen kann.

Auch kann Flüssigkeit hierdurch unkontrolliert und ungewollt aus der Auslassöffnung der Druckdüse heraustreten und dort aushärten, so dass sich ein vertikal nach unten hervorragender fester Vorsprung an der Druckdüse bilden kann. Wird der Druckkopf nun zur nächsten Position verfahren und hierbei der Ausstoß der Flüssigkeit unterbrochen, was als Leerfahrt bezeichnet werden kann, kann ein an der Auslassöffnung der Druckdüse gebildeter vertikal nach unten hervorragender fester Vorsprung mit einem bereits aufgebauten Bereich des auszubildenden Werkstücks kollidieren und hierdurch das auszubildende Werkstück beschädigen. Dies kann den Ausschuss der Fertigung erhöhten. Wird dies nicht in diesem Moment erkannt und der Vorgang des 3D-Druckens fortgesetzt, kann das Werkstück fertiggestellt und erst dann als fehlerhaft erkannt werden. Dies kann besonders zu erhöhten Herstellungskosten der Werkstücke führen.

Um zu vermeiden, dass das auszubildende Werkstück aufgrund eines an der Auslassöffnung der Druckdüse gebildeten vertikal nach unten hervorragenden festen Vorsprungs beschädigt wird ist es bekannt, während der Leerfahrten den vertikalen Abstand zwischen dem auszubildenden Werkstück und der Auslassöffnung der Druckdüse zu erhöhen und hierzu die Auslassöffnung der Druckdüse gegenüber dem Druckbett in der vertikalen Richtung anzuheben bzw. das Druckbett gegenüber der Auslassöffnung der Druckdüse in der vertikalen Richtung abzusenken. Dies bedeutet jedoch einen zusätzlichen Aufwand, welcher Zeit und bzw. oder elektrische Energie kosten kann. Dies kann die Herstellungsdauer des Werkstücks erhöhen, was üblicherweise unerwünscht ist. Auch kann dies den Verschleiß und bzw. oder die Erwärmung der hieran beteiligten Antriebe erhöhen.

Die WO 2017/206128 A1 beschreibt einen Druckkopf für den 3D-Druck bestehend aus einem Gehäuse, einem Schneckenextrusionssystem, Befestigungssockeln, Zylindern, Ventilnadeln und Düsen. Ein Antriebssystem ist an einem Ende des Gehäuses angeordnet. Das Schneckenextrusionssystem ist in dem Gehäuse angeordnet und besteht aus mindestens zwei Schnecken, die innen und außen ineinander verschachtelt sind, wobei mindestens eine Schnecke von dem Antriebssystem angetrieben wird. Die Montagesockel sind unterhalb des Schraubenextrusionssystems angebracht. Ein oder mehrere Innenlöcher sind axial in den Montagesockeln verteilt, und in der oberen oder seitlichen Oberfläche jedes Innenlochs ist eine Auslassabzweigöffnung ausgebildet. Die Zylinder sind entsprechend in den inneren Löchern der Montagesockel montiert, jeder Zylinder erstreckt sich von einem Ende des entsprechenden Montagesockels aus, und eine Zylinderzuführungsöffnung ist im oberen Ende des Zylinders ausgebildet. In den Zylindern sind Ventilhohlräume ausgebildet. Die Ventilnadeln durchdringen die Ventilhohlräume der Zylinder und sind auf den Befestigungssockeln montiert, und die Lücken zwischen den Ventilnadeln und den Ventilhohlräumen bilden Auslasskanäle, die mit den Zylinderzuführöffnungen in Verbindung stehen. Die Düsen sind an den hinteren Enden der entsprechenden Zylinder angeordnet. Der Druckkopf hat ein geringes Gewicht, eine geringe Größe, ein ausgewogenes Verhältnis zwischen hoher Druckpräzision und hoher Druckgeschwindigkeit, ein neuartiges Design, eine hohe Praktikabilität und einen hohen wirtschaftlichen Wert.

Eine Aufgabe der vorliegenden Erfindung ist es, eine Druckvorrichtung der eingangs beschriebenen Art bereit zu stellen, so dass die Herstellungsqualität der herzustellenden Werkstücke erhöht werden kann. Zusätzlich oder alternativ sollen die Herstellungskosten der herzustellenden Werkstücke reduziert werden. Zusätzlich oder alternativ soll die Herstellungsdauer der herzustellenden Werkstücke gesenkt werden. Zusätzlich oder alternativ soll das Spektrum der verwendbaren Materialien erhöht werden. Zumindest soll eine Alternative zu bekannten derartigen Druckvorrichtungen geschaffen werden.

Die Aufgabe wird erfindungsgemäß durch eine Druckvorrichtung mit den Merkmalen des Patentanspruchs 1 gelöst. Vorteilhafte Weiterbildungen sind in den Unteransprüchen beschrieben.

Somit betrifft die vorliegende Erfindung eine Druckvorrichtung, vorzugsweise einen 3D-Drucker, mit wenigstens einer Druckdüse, welche ausgebildet ist, ein fließfähiges Material durch wenigstens eine Ausstoßöffnung hindurch in Richtung einer, vorzugsweise horizontalen, Arbeitsfläche auszustoßen. Das fließfähige Material kann jegliches fließ- und bzw. oder förderfähiges Material sein, welches für den entsprechenden Anwendungsfall geeignet ist, einen Druckvorgang ausführen und ein gedrucktes Produkt zu erzeugen. Für einen 3D-Druck können dies insbesondere die eingangs genannten Materialien sein. Insbesondere kann mittels des fließfähigen Materials ein dreidimensionales Werkstück durch Drucken, wie eingangs beschrieben, hergestellt werden. Die Ausbildung des Werkstücks, insbesondere in der Höhe, kann auf der Arbeitsfläche erfolgen.

Die Druckdüse weist ein feststehendes Druckdüsengestell und einen relativ zum Druckdüsengestell, vorzugsweise in der Höhe, beweglichen Druckdüsenkopf mit der Ausstoßöffnung auf. Mit anderen Worten ist die Ausstoßöffnung, welche auch als Düsenöffnung bezeichnet werden kann, an dem beweglichen Druckdüsenkopf angeordnet. Hierzu kann die Ausstoßöffnung durch den Druckdüsenkopf ausgebildet oder als separates Bauteil an dem Druckdüsenkopf angeordnet sein.

Die Druckdüse ist ausgebildet, den Druckdüsenkopf relativ zum Druckdüsengestell, vorzugsweise in der Höhe, zwischen einer Öffnungsposition, in welcher ein Fließen des fließfähigen Materials durch die Ausstoßöffnung hindurch zugelassen wird, und einer Schließposition, in welcher ein Fließen des fließfähigen Materials durch die Ausstoßöffnung hindurch nicht zugelassen wird, mittels eines Antriebs, vorzugsweise mittels eines piezoelektrischen oder pneumatischen Antriebs, zu bewegen, wobei die Ausstoßöffnung des Druckdüsenkopfs in der Schließposition weiter zu der Arbeitsfläche beabstandet ist als in der Öffnungsposition.

Mit anderen Worten wird die Ausstoßöffnung mit dem Druckdüsenkopf relativ zum feststehenden Druckdüsengestell mitbewegt, so dass bei jedem Schließen der Ausstoßöffnung auch gleichzeitig eine Vergrößerung des Abstands der Ausstoßöffnung zur Arbeitsfläche bzw. zum dort im Druck befindlichen Werkstück erfolgt. Hierdurch kann nicht nur das Drucken bzw. das Ausstoßen des fließfähigen Materials durch die Ausstoßöffnung hindurch bzw. aus der Ausstoßöffnung heraus unterbunden werden, sondern zusätzlich kann gleichzweitig der Abstand der Ausstoßöffnung zur Arbeitsfläche und insbesondere zum dort im Druck befindlichen Werkstück vergrößert werden. Hierdurch kann sichergestellt oder zumindest die Wahrscheinlichkeit erhöht werden, dass die Arbeitsfläche bzw. das im Druck befindliche Werkstück nicht mehr mit der Ausstoßöffnung bzw. dessen Rand sowie einem ggfs. dort befindlichen fließfähigen oder ausgehärteten Anteil des fließfähigen Materials in Kontakt kommt, was zu den eingangs beschriebenen entsprechenden Nachteilen und Problemen führen kann. Vielmehr kann ein ausreichender Abstand zwischen der Ausstoßöffnung und der Arbeitsfläche bzw. dem Werkstück gewährleistet werden, um dies zu vermeiden.

Diese Bewegung von der Arbeitsfläche weg kombiniert mit der Schließbewegung der Ausstoßöffnung als eine einzige Bewegung auszuführen, kann die Bewegung beschleunigen bzw. Zeit sparen. Dies kann insbesondere bei hochdynamisch ablaufenden Druckvorgängen von Vorteil sein und Bearbeitungszeit sparen. Dies kann insbesondere durch die Verwendung eines piezoelektrischen Antriebs ermöglicht bzw. weiter beschleunigt werden, während ein pneumatischer Antrieb diese Bewegung vergleichbar bewirken kann, jedoch üblicherweise mit einer geringeren Dynamik, dafür aber zu geringeren Kosten der erforderlichen technischen Komponenten. Auch kann durch die Ausführung zweier Funktionen durch eine einzige Bewegung, nämlich das Schließen und das Beabstanden, der hierfür erforderliche Aufwand geringgehalten werden. Dies kann sich jeweils und insbesondere in Kombination miteinander z. B. kostensparend, energiesparend und bzw. oder bauraumsparend auf die Druckvorrichtung auswirken. Insbesondere kann bei Leerfahrten über die Arbeitsfläche bzw. über das zu druckende Bauteil bzw. Werkstück durch die Bewegung und insbesondere durch die vertikale Bewegung des Druckdüsenkopfes relativ zum Druckdüsengestell gewährleistet werden, dass bereits gedruckte Bereiche des Werkstücks nicht beschädigt werden. Ein bisher übliches Verfahren des Druckkopfes in der Z-Achse bei Leerfahrten kann somit entfallen.

Erfindungsgemäß weist das Druckdüsengestell wenigstens zwei Dichtflächen und der Druckdüsenkopf wenigstens zwei Dichtflächen auf, welche jeweils einander paarweise derart gegenüberliegend ausgebildet sind, so dass in der Öffnungsposition das eine Paar von Dichtflächen zueinander beabstandet ist und zwischen sich einen Übergangsbereich bildet, durch welchen hindurch das Fließen des fließfähigen Materials zur Ausstoßöffnung hin zugelassen wird, und das andere Paar von Dichtflächen miteinander abdichtet, so dass das Fließen des fließfähigen Materials zu einer Auslassöffnung hin zwischen den beiden Dichtflächen hindurch nicht zugelassen wird, und in der Schließposition das eine Paar von Dichtflächen miteinander abdichtet, so dass das Fließen des fließfähigen Materials zur Ausstoßöffnung hin zwischen den beiden Dichtflächen hindurch nicht zugelassen wird, und das andere Paar von Dichtflächen zueinander beabstandet ist und zwischen sich einen Übergangsbereich bildet, durch welchen hindurch das Fließen des fließfähigen Materials zu der Auslassöffnung hin zugelassen wird.

Mit anderen Worten wirken die beiden Paar von Dichtflächen zwischen dem Druckdüsengestell und dem Drückdüsenkopf wechselseitig derartig miteinander, so dass das fließende Material entweder durch einen Übergangsbereich zwischen dem einen, ersten Paar von Dichtflächen, wie zuvor beschrieben, zu der Ausstoßöffnung gelangen und ausgestoßen werden kann, oder durch einen Übergangsbereich zwischen dem anderen, zweiten Paar von Dichtflächen zu einer Auslassöffnung der Druckdüse gelangen kann. Über die Auslassöffnung der Druckdüse kann das fließende fließfähige Material aus der Druckdüse entweichen, ohne dabei zur Arbeitsfläche zu gelangen. Insbesondere kann das fließende fließfähige Material in einem Aufnahmeraum aufgefangen bzw. aufgenommen oder mittels einer Rückführung wieder dem fließenden fließfähigen Material zugeführt werden, welches der Druckdüse zugeführt wird, wie weiter unten noch näher beschrieben werden wird.

In jedem Fall kann das Fließen des fließfähigen Materials beibehalten werden, unabhängig davon, ob das fließende fließfähige Material der Ausstoßöffnung des Druckdüsenkopfs der Druckdüse oder der Auslassöffnung der Druckdüse zugeführt wird. Dies kann es ermöglichen, beim Wechsel von der Schließposition in die Öffnungsposition das ruhende fließfähige Material nicht in Bewegung bringen oder ein gegen einen Widerstand gedrücktes, d.h. ein unter Druck stehendes, ruhendes fließfähiges Material der Ausstoßöffnung des Druckdüsenkopfs zuführen zu müssen. Dies kann im ersten Fall zu einer Verzögerung des Ausstoßens und ggfs. zu einem zu geringen Ausstoß des fließfähigen Materials führen, was das Druckbild verschlechtern und bei einem 3D-Druck das herzustellenden Werkstück unzureichend ausbilden und unbrauchbar machen kann. Im zweiten Fall kann dies durch einen übermäßigen, stoßartigen Austrag durch zu viel ausgestoßenes fließfähiges Material zu einem verschlechterten Druckbild und bei einem 3D-Druck zu einem übermäßig ausgebildeten Werkstück führen und dieses ebenfalls unbrauchbar machen.

Dies kann erfindungsgemäß jeweils dadurch verhindert werden, indem das kontinuierlich fließende fließfähige Material entweder der Ausstoßöffnung des Druckdüsenkopfes oder der Auslassöffnung der Druckdüse zugeführt wird, so dass beim Schließen der Ausstoßöffnung des Druckdüsenkopfes der Strom des fließendes fließfähigen Materials nicht angehalten oder in der Fließgeschwindigkeit verändert werden muss. Wird dann die Öffnungsposition eingenommen, steht das fließfähige Material bereits fließend und ohne die zuvor beschriebenen Druckschwankungen zur Verfügung, was ein gleichbleibendes Druckbild bzw. durch 3D-Druck ausgebildetes Werkstück begünstigen kann.

Gemäß einem Aspekt der Erfindung sind die beiden Paare von Dichtflächen jeweils ausgebildet, einander in der Bewegungsrichtung flächig oder linienförmig zu berühren, oder die beiden Paare von Dichtflächen sind jeweils schräg oder rechtwinkelig zur Bewegungsrichtung des Druckdüsenkopfs gegenüber dem Druckdüsengestell zueinander ausgebildet.

Dies kann die Gestaltungsmöglichkeiten der Dichtfunktion in der Schließposition erhöhen. Auch kann hierdurch die Dichtwirkung zwischen den beiden Dichtflächen verbessert und prozesssicherer werden. Dies kann insbesondere für konische Dichtflächen gelten.

Dabei können gekrümmte, konische und bzw. oder sphärische Dichtflächen jedoch den Nachteil aufweisen, dass aufgrund von einander um- oder hintergreifenden Bauteilen des Druckdüsengestells und bzw. oder des Druckdüsenkopfes diese mehrteilig auszuführen und im Rahmen der Montage der Druckdüse miteinander zu verbinden sein können. Dies kann den Herstellungs- und bzw. oder Montageaufwand dieser Bauteile erhöhen. Auch kann dies die zulässigen Fertigungs- und bzw. oder Montagetoleranzen vergrößern.

Hingegen können Dichtflächen, welche rechtwinkelig zur Bewegungsrichtung des Druckdüsenkopfs gegenüber dem Druckdüsengestell ausgebildet sind, ein derartiges Um- bzw. Hintergreifen vermeiden, so dass das Druckdüsengestell und der Druckdüsenkopf einstückig hergestellt werden können, was die Herstellung und bzw. oder Montage vereinfachen und bzw. oder eine Vergrößerung der zulässigen Fertigungs- und bzw. oder Montagetoleranzen erlauben kann.

Je nach Geometrie des Druckdüsengestells und bzw. oder des Druckdüsenkopfes kann dies die gewünschte Dichtigkeit bewirken und bzw. oder einfach, schnell und bzw. oder umzusetzen bzw. herzustellen sein. Dabei kann ein flächiger Kontakt der beiden Dichtflächen die gewünschte dichtende Wirkung, insbesondere bei einem eher hochviskosen fließfähigen Material, bereits erreichen und vergleichsweise einfach auszubilden und bzw. oder aufgrund der vergleichsweise gleichmäßigen Verteilung der Druck- bzw. Kontaktkräfte verschleißarm sein. Ein linienförmiger Kontakt der beiden Dichtflächen kann aufgrund einer höheren Flächenpressung der beiden Dichtflächen eine höhere dichtende Wirkung erreichen, was bei niederviskosen fließfähigen Materialien vorteilhaft bzw. erforderlich sein kann.

Gemäß einem weiteren Aspekt der Erfindung weist die Druckvorrichtung wenigstens einen Aufnahmeraum, vorzugsweise eines Druckkopfes, auf, welcher ausgebildet ist, das fließfähige Material von der Auslassöffnung der Druckdüse aufzunehmen, und bzw. oder wenigstens eine Rückführung, vorzugsweise eines Druckkopfes, welche ausgebildet ist, das fließfähige Material von der Auslassöffnung der Druckdüse zu erhalten und einer Einlassöffnung der Druckdüse zuzuführen. Im ersten Fall kann das fließfähige Material, welches in der Schließposition der Druckdüse ungenutzt von dieser nach außen in den Aufnahmeraum als Auffangbehälter abgeführt wird, dort gesammelt und von einem Benutzer z. B. nach dem Abschluss des Druckvorgangs entnommen und entsorgt oder für eine erneute Verwendung aufbereitet werden. Im zweiten Fall kann das fließende fließfähige Material, vorzugsweise möglichst direkt, dem Materialfluss in die Druckdüse hinein zumindest beigemischt werden, um eine direkte erneute Verwendung zu ermöglichen. Insbesondere die erneute Verwendung des aus der Druckdüse abgeführten fließfähigen Materials, ob direkt oder nach Entnahme aus dem Aufnahmeraum, kann die Materialkosten des Druckvorgangs reduzieren.

Gemäß einem weiteren Aspekt der Erfindung sind die Übergänge der beiden Paare von Dichtflächen jeweils zueinander ausgebildet, das Fließen des fließfähigen Materials konstant zu halten. Mit anderen Worten können die Paare von Dichtflächen bzw. das Druckdüsengestell und der Druckdüsenkopf im Bereich der Dichtflächen derart ausgebildet sein, so dass sich der Übergangsbereich des einen, ersten Paares von Dichtflächen zumindest im Wesentlichen in dem Maße vergrößert, um welches sich der Übergangsbereich des anderen, zweiten Paares von Dichtflächen im selben Moment verringert. Dies kann die Strömungsgeschwindigkeit bzw. den Druck des fließenden fließfähigen Materials in der Summe während des jeweiligen Umschaltens zwischen der Öffnungsposition und der Schließposition möglichst konstant halten und hierdurch eine Veränderung des Fließens des fließfähigen Materials vermeiden, was sonst zu den zuvor beschriebene Nachteilen eines verringerten oder übermäßigen Ausstoßes des fließenden fließfähigen Materials führen könnte.

Gemäß einem weiteren Aspekt der Erfindung weist das Druckdüsengestell und bzw. oder der Druckdüsenkopf zwischen einem sich in der Öffnungsposition zwischen dem Druckdüsengestell und dem Druckdüsenkopf ausbildenden Übergangsbereich und der Auslassöffnung und zwischen einem sich in der Schließposition zwischen dem Druckdüsengestell und dem Druckdüsenkopf ausbildenden Übergangsbereich und der Ausstoßöffnung zumindest im Wesentlichen den gleichen Strömungswiderstand für das fließfähige Material auf. Mit anderen Worten sind die Bereiche des Druckdüsengestells und bzw. oder des Druckdüsenkopfes, welche sich unmittelbar den Übergangsbereichen anschließen, hinsichtlich ihres Strömungswiderstands möglichst gleich ausgebildet. Dies kann ebenfalls eine möglichst gleichbleibende Strömung des fließenden fließfähigen Materials beim jeweiligen Umschalten zwischen der Öffnungsposition und der Schließposition begünstigen.

Gemäß einem weiteren Aspekt der Erfindung ist die Ausstoßöffnung verengt ausgebildet. Dies kann eine Druckerhöhung des fließfähigen Materials unmittelbar vor dem Ausstoßen aus der Ausstoßöffnung bewirken, um den Vorgang des Ausstoßens gezielt zu beeinflussen. Durch die Geometrie der Ausstoßöffnung und insbesondere durch deren Kontur und bzw. oder Größe kann hierauf gezielt Einfluss genommen werden.

Gemäß einem weiteren Aspekt der Erfindung weist die Druckvorrichtung wenigstens eine Dosierpumpe auf, welche ausgebildet ist, das fließfähige Material durch eine Einlassöffnung hindurch zugeführt zu bekommen und durch eine Auslassöffnung hindurch der Druckdüse zuzuführen, wobei die Dosierpumpe wenigstens ein erstes Kammervolumen und ein zweites Kammervolumen aufweist, welche jeweils alternativ zueinander mit der Einlassöffnung oder mit der Auslassöffnung das fließfähige Material fördernd verbunden werden können. Eine derartige Dosierpumpe kann auch als Doppelkolbenpumpe oder Axialkolbenpumpe bezeichnet werden. In jedem Fall kann es hierdurch ermöglicht werden, das fließfähige Material von einer Quelle der Druckvorrichtung, wie weiter unten noch näher beschrieben werden wird, zunächst der Dosierpumpe zuzuführen, dort innerhalb eines Kammervolumens des Druck des fließfähigen Materials auf einen vorbestimmten Druck zu erhöhen und das fließfähige Material mit diesem vorbestimmten Druck der Druckdüse zuzuführen, während das andere Kammervolumen mit weiterem fließfähigen Material von der Quelle aufgefüllt wird. Dies kann die Bereitstellung des fließfähigen Materials näher an der Druckdüse als seitens der Quelle des fließfähigen Materials ermöglichen. Insbesondere können die Dosierpumpe und die Druckdüse gemeinsam an einem Druckkopf angeordnet sein, was die Umsetzung der zuvor beschriebenen Eigenschaften und bzw. oder Vorteile begünstigen kann.

Gemäß einem weiteren Aspekt der Erfindung sind die beiden Kammervolumen einander geradlinig gegenüberliegend angeordnet, wobei die beiden Kammervolumen einander zugewandt durch ein Ventilelement von einander getrennt sind, wobei die beiden Kammervolumen einander abgewandt durch jeweils einen Kolben begrenzt werden, wobei die beiden Kolben mittels einer Kolbenverbindung feststehend miteinander verbunden sind, um gemeinsam in derselben Richtung translatorisch bewegt zu werden. Dies kann die Umsetzung, insbesondere als Doppelkolbenpumpe, ermöglichen bzw. vereinfachen.

Gemäß einem weiteren Aspekt der Erfindung sind die beiden Kolben ausgebildet, mittels eines Kolbenantriebs und mittels des Drucks des fließfähigen Materials gemeinsam in derselben Richtung translatorisch bewegt zu werden. Dies kann den Antrieb davon entlasten, den erforderlichen Druck auf das fließfähige Material in dem einen, ersten Kammervolumen, welches fließfähig mit der Auslassöffnung der Dosierpumpe verbunden ist, aufzubringen, wodurch der Kolbenantrieb leistungsschwächer, kleiner, leichter und bzw. oder energiesparender ausgebildet sein kann. Vielmehr kann der Druck des einströmenden fließfähigen Materials in das andere, zweite Kammervolumen, welches fließfähig mit der Einlassöffnung verbunden ist, von dessen Kolben mittels der zuvor erwähnten Kolbenverbindung auf den Kolben des einen, ersten Kammervolumens übertragen werden. Dies kann den Kolbenantrieb entsprechend entlasten.

Gemäß einem weiteren Aspekt der Erfindung ist das Ventilelement ausgebildet, mittels eines Ventilantriebs senkrecht zur translatorischen Bewegungsrichtung der beiden Kolben gedreht zu werden. Dies kann ein Umschalten zwischen wenigstens zwei Positionen ermöglichen, um abwechselnd entweder das erste Kammervolumen mit der Einlassöffnung der Dosierpumpe und das zweite Kammervolumen gleichzeitig mit der Auslassöffnung der Dosierpumpe zur Förderung des fließenden Materials zu verbinden, oder umgekehrt. Insbesondere kann dies durch eine Drehbewegung vergleichsweise direkt, einfach und bzw. oder platzsparend umgesetzt werden.

Gemäß einem weiteren Aspekt der Erfindung ist die Kolbenverbindung außerhalb der beiden Kammervolumen angeordnet. Dies kann die Umsetzung der zuvor beschriebenen Kopplung der beiden Kolben ermöglichen, ohne die Kolbenverbindung dabei durch die beiden Kammervolumen führen zu müssen, was entsprechende Dichtungen erfordern würde. Auch müsste dies bei der Konstruktion der Kolben berücksichtigt werden. Ferner könnte dies die Umsetzung des Ventilelements als drehbares Ventilelement verhindern oder zumindest erschweren. Dies kann durch die Anordnung der Kolbenverbindung außerhalb der beiden Kammervolumen vermieden werden.

Gemäß einem weiteren Aspekt der Erfindung weist die Druckvorrichtung wenigstens eine Plastifizierungseinheit, vorzugsweise wenigstens einen Plastifizierer, auf, welche gegenüber der Druckdüse feststehend angeordnet und ausgebildet ist, das fließfähige Material zu erzeugen, wobei die Plastifizierungseinheit mittels wenigstens eines, vorzugsweise schlauchartigen, Materialführungselements, welches ausgebildet ist, das fließfähige Material zu fördern, mit der Druckdüse verbunden ist, wobei das Materialführungselement vorzugsweise beheizbar ausgebildet ist.

Diesem Aspekt der Erfindung liegt die Erkenntnis zugrunde, dass allen eingangs beschriebenen Druckvorrichtungen und insbesondere bei 3D-Druckern auch gemeinsam ist, dass das zu verflüssigende Material üblicherweise als drahtförmiges z. B. Kunststoffmaterial von einem relativ zu einem Gestell des 3D-Druckers stillstehenden Materialspeicher über eine schlauchartige Materialzuführung dem Druckkopf zugeführt wird. Der Druckkopf weist den eingangs erwähnten Plastifizierer auf, welcher das ihm zugeführte Kunststoffmaterial plastifiziert und als Flüssigkeit in die Aufnahmekammer des Druckkopfes leitet, von wo die Flüssigkeit wie zuvor beschrieben über die Auslassöffnung der Druckdüse zum schichtweisen Aufbau des Werkstücks vertikal nach unten abgegeben werden kann. Hierzu kann der Druckkopf üblicherweise horizontal verfahren werden. Eine vertikale Bewegung kann ebenfalls seitens Druckkopfs oder der horizontalen Arbeitsfläche erfolgen.

Nachteilig ist hierbei, dass mit dem Druckkopf der Plastifizierer mitbewegt werden muss. Somit weist der Druckkopf ein vergleichsweise großes Gewicht auf. Dies erfordert einen entsprechend massiven Aufbau des Druckkopfs sowie dessen Halterung. Entsprechend sind auch die Antriebe auszulegen, um die Druckkopfhalterung bzw. den Druckkopf samt Plastifizierer bewegen zu können. Dies erhöht insgesamt die Größe, das Gewicht, den Energieverbrauch und bzw. oder die Erwärmung derartiger 3D-Drucker.

Nachteilig ist hierbei insbesondere, dass der Druckkopf samt Plastifizierer eine entsprechend große Massenträgheit aufweist, welche bei der Bewegung zu beschleunigen sowie abzubremsen ist. Da das 3D-Drucken des Werkstücks üblicherweise mit sehr vielen kurzen Bewegungen erfolgt, um die Auslassöffnung der Druckdüse des Druckkopfes horizontal innerhalb der aufzubauenden Schicht des Werkstücks zu bewegen, kann die Massenträgheit des Druckkopfs samt Plastifizierer ein limitierender Faktor bei der Druckgeschwindigkeit sein. Auch kann die zu beschleunigende und abzubremsende Massenträgheit des Druckkopfs samt Plastifizierer zu dem bereits erwähnten vergleichsweise hohen Verbrauch elektrischer Energie mit einer entsprechend großen Erwärmung der Antriebe führen. Dies kann ggfs. eine aktive Kühlung der Antriebe erforderlich machen, was wiederum das Gewicht, den Bauraum, die Kosten und bzw. oder den Energieverbrauch erhöhen kann.

Erfindungsgemäß kann daher die Plastifizierungseinheit, welche auch als Plastifizierer bezeichnet werden kann, feststehend am Gestell und damit nicht mit einem beweglichen Druckkopf und dessen Druckdüse mitbeweglich angeordnet werden. Dies kann das Gewicht, den Bauraum und bzw. oder die Massenträgheit des zu bewegenden Druckkopfes deutlich reduzieren, was sich entsprechend platz-, kosten- und bzw. oder energiesparend auf den Druckkopf selbst sowie dessen Bewegungskinematik auswirken kann.

Stattdessen kann die Plastifizierungseinheit stationär angeordnet und betrieben werden, was z. B. auch mittels Granulat erfolgen kann. Dies kann die Materialkosten des fließfähigen Materials reduzieren und bzw. oder die Auswahl verwendbarer fließfähiger Materialien erhöhen. Das Material kann dann in der Plastifizierungseinheit durch Erwärmen mittels einer, vorzugsweise elektrischen, Beheizung in Kombination mit einer Erwärmung des Materials mittels dessen innerer Reibung durch die Drehbewegung einer Schnecke der Plastifizierungseinheit bei gleichzeitiger Kompression des Materials in den fließfähigen Zustand gebracht und durch das Materialführungselement z. B. als Schlauch zum Druckkopf gefördert werden. Am Druckkopf kann das fließende fließfähige Material dann wie zuvor beschrieben direkt oder nach einer Druckerhöhung durch die zuvor beschriebene Dosierpumpe zum Drucken verwendet und ausgestoßen werden.

Die Verwendung eines Schlauchs als Materialführungselement kann dessen Flexibilität erhöhen, so dass das Materialführungselement mit einem sich bewegenden Druckkopf verbunden werden kann. Hierbei das Materialführungselement gleichzeitig oder alternativ beheizbar und insbesondere elektrisch beheizbar auszubilden kann es ermöglichen, dass durch Erwärmen fließfähig gemachte Material durch die einstellbare Wärme des beheizbaren Materialführungselements fließfähig zu halten. Eine elektrische Beheizung kann dabei besonders einfach, platzsparend und bzw. oder genau und bzw. oder gleichmäßig einstellbar sein.

Mit anderen Worten liegt der Erfindung der Gedanke zugrunde, eine Druckvorrichtung insbesondere für einen 3D-Druck nach dem FDM-Verfahren zur Verfügung zu stellen, welche insbesondere handelsübliche Thermoplast-Granulate anstelle von bisher üblichen Filamenten verwenden kann. Hierin können die Vorteile eines geringeren Materialpreises des fließfähigen Materials, eines höheren Materialdurchsatzes des fließfähigen Materials, eine größere Materialauswahl des fließfähigen Materials und bzw. oder eine höhere Bauteilqualität des 3D-gedruckten Werkstücks gesehen werden.

Mittels der erfindungsgemäßen Druckvorrichtung kann insbesondere ein Granulat mit einem handelsüblichen Plastifizierer aufgeschmolzen werden. Dieser Plastifizierer kann stationär in der Druckvorrichtung verbaut und damit nicht, wie bei den eingangs beschriebenen Druckvorrichtungen üblich, mit dem Druckkopf mit verfahren werden. Das Druckbett als horizontale Arbeitsfläche und damit das zu druckende Werkstück werden vorzugswiese ebenfalls nicht in der horizontalen Ebene verfahren.

Die z. B. Thermoplast-Schmelze als fließfähiges Material kann vorzugsweise über eine flexible Schmelze-Leitung z. B. in Form eines Heizschlauches zum Druckkopf geleitet werden, welcher z. B. mittels einer hochdynamischen Kinematik in der horizontalen Ebene sowie in der vertikalen Richtung gegenüber der Arbeitsfläche und dem zu druckenden Werkstück verfahren und positioniert werden kann. Alternativ kann die Zuführung des fließfähigen Materials auch über eine starre Schmelze-Leitung z. B. in Form von Rohren mit Drehgelenken bzw. Scherengelenke erfolgen, welche vorzugsweise ebenfalls beheizbar sein können. Auch können flexible und starre Leitungselemente miteinander kombiniert eingesetzt werden.

Der Druckkopf kann die zuvor beschriebene Dosierpumpe und Druckdüse als Verschlussdüse aufweisen. Die Dosierpumpe kann in der Lage sein, in Abhängigkeit der Verfahrbewegung des Druckkopfes die entsprechende Menge des fließfähigen Materials in die Verschlussdüse zu fördern. Von dort kann das fließfähige Material auf dem Druckbett bzw. auf dem Bauteil bzw. Werkstück aufgetragen werden. Um ein Starten des Materialaustrags aus der Ausstoßöffnung der Druckdüse zu Beginn und ein Stoppen des Materialaustrags aus der Ausstoßöffnung der Druckdüse am Ende einer Bahn zu realisieren, kann die Druckdüse über einen Verschlussmechanismus verfügen, welcher zeitgleich die Druckdüse in der vertikalen Richtung nach oben aus der Druckebene herausbewegt, um so bereits gedruckte Bereiche des Werkstücks zu schützen.

Die Druckdüse bzw. die Verschlussdüse kann bei der erfindungsgemäßen Druckvorrichtung einen wesentlichen Bestandteil darstellen, um den Durchfluss des fließfähigen Materials aus der Ausstoßöffnung der Druckdüse zu starten und zu stoppen und so ein sauberes Druckbild zu erzeugen. Der Konstruktion der Druckdüse bzw. der Verschlussdüse liegt dabei die Erkenntnis zugrunde, dass lediglich durch eine Änderung in der Fördergeschwindigkeit des fließfähigen Materials z. B. seitens der Plastifizierungseinheit ein definiertes Beenden des Materialaustrages aus der Ausstoßöffnung des Druckdüsenkopfes nicht gewährleistet werden könnte. Hierzu kann zum einen die Dynamik der Plastifizierungseinheit und deren Antriebes sowie der Dosierpumpe zu träge sein. Zum anderen kann die Materialsäule des fließfähigen Materials in dem Materialführungselement wie z. B. in dem beheizbaren Schlauch zwischen Plastifizierer und Druckdüse eine Elastizität aufweisen, z. B. aufgrund des viskoelastischen Verhaltens einer Polymerschmelze, sodass ein "charfer/steiler" Druckabfall zum Stoppen sowie ein "charfer/steiler" Druckanstieg zum Starten des Ausstoßens des fließfähigen Materials aus der Ausstoßöffnung der Druckdüse allein durch die Plastifizierungseinheit nicht erreicht werden kann.

Erfindungsgemäß kann daher die zuvor beschriebene Druckdüse verwendet werden, insbesondere in Kombination mit einer stationär angeordneten Plastifizierungseinheit. Dabei kann die Ausstoßöffnung der Druckdüse als Düsenöffnung, aus welcher das fließfähige Material auf das Bauteil bzw. Werkstück aufgetragen werden kann, zum Stoppen des Materialaustrages verschlossen werden. Durch die Schließbewegung des Druckdüsenkopfes relativ zum Druckdüsengestell, vorzugsweise im Inneren des Druckdüsengestells, kann vorzugsweise zeitgleich eine Verbindung bzw. ein Durchgangsbereich zu einem Auslass freigegeben werden, durch den das fließfähige Material aus der Druckdüse ausströmen kann. Der Materialfluss wird somit vorzugsweise während des Schließvorganges der Ausstoßöffnung der Druckdüse nicht gestoppt. Daher kann der Druckdüsenkopf auch als Umschaltventil bezeichnet werden. Vorzugsweise weist der Auslass denselben Strömungswiderstand wie die Düse zum Auftrag des fließfähigen Materials auf das Bauteil bzw. auf das Werkstück auf. Dadurch kann bei Umschalten des Materialflusses nur eine geringe bis gar keine Druckänderung in der geförderten Schmelze erfolgen.

Nach Beendigung des Umschaltvorganges durch die Druckdüse kann der Materialfluss durch den Plastifizierer mit entsprechend langsamer Charakteristik gestoppt werden, ohne negativen Einfluss auf die Druckqualität zu nehmen. Im umgekehrten Fall kann beim Starten des Materialaustrages auf das Bauteil der Plastifizierer mit langsamer Charakteristik den Materialfluss bei verschlossener Ausstoßöffnung der Druckdüse starten. In diesem Zustand kann das fließfähige Material über den Auslass vorzugsweise in einen Rücklauf gefördert werden. Hat sich ein definierter Materialstrom ausgebildet und haben sich die Druckverhältnisse in der Schmelze stabilisiert, so kann durch Umschalten des beweglichen Druckdüsenkopfes der Druckdüse der Materialaustrag auf das Bauteil gestartet werden. Die Strömungswiderstände im Inneren der Druckdüse können vorzugsweise derart ausgestaltet sein, dass auch bei diesem Umschaltvorgang keine Druckänderung in der Schmelze entsteht. Dies kann zu einem sauberen Druckbild führen.

Für den Fall der Umsetzung der erfindungsgemäßen Druckvorrichtung mit separatem, stationärem Plastifizierer kann eine verhältnismäßig lange Zuleitung in Form des Materialführungselements mit einer entsprechend langen Materialsäule in dessen Inneren vorliegen. Die Elastizität der Schmelze in der Zuleitung, d.h. aufgrund des viskoelastischen Verhaltens einer Polymerschmelze, kann dazu führen, dass eine Dosierung des Materialaustrags aus der Ausstoßöffnung der Druckdüse durch eine Ansteuerung der Plastifizierungseinheit nicht prozesssicher mit der geforderten Genauigkeit realisiert werden kann, wie bereits zuvor beschrieben. Daher kann vorzugsweise die Verwendung einer separaten Dosierpumpe vorgesehen werden, wie zuvor beschrieben. Diese kann im Verhältnis zur Plastifizierungseinheit ein deutlich geringeres Gewicht aufweisen und daher mit der Druckdüse zusammen am Druckkopf verfahren werden. Dadurch kann das Volumen der Materialsäule zwischen Dosierpumpe und Druckdüse deutlich verringert werden, was entsprechende Vorteile bei der Druckqualität bewirken kann.

Die Dosierpumpe kann im Funktionsprinzip einer doppelt wirkenden Kolbenpumpe umgesetzt werden. Es existieren zwei getrennte Kammervolumen sowie ein Ventil, durch welches die Schmelze als fließendes Material von der Plastifiziereinheit zu einer der beiden Kammern und von der anderen Kammer zur Druckdüse fließen kann. Sobald eine der beiden Kammern geleert ist, kann der Materialfluss mit Hilfe des Ventils umgeschaltet werden. Zwei Kolben, welche zusammen mit einem Zylinder das Kammervolumen bilden, können kraftschlüssig miteinander verbunden sein. Gegenüber konventionellen Anordnungen kann der Kraftschluss nicht über eine gemeinsame Kolbenstange innerhalb des Kammervolumens sondern über wenigstens eine Zugstrebe außerhalb des Kammervolumens erfolgen. Dadurch können zusätzliche Dichtflächen für Schaftdichtungen an den Kolbenstangen entfallen. Der Kraftschluss der Kolbenstange kann den Vorteil aufweisen, dass der durch die Plastifizierungseinheit zur Verfügung gestellte Druck der Schmelze eine Kraftkomponente bildet, welche die Kraft unterstützt, welche notwendig ist, um den notwendigen Druck für den Materialaustrag aus der Ausstoßöffnung der Druckdüse aufzubringen. Dadurch kann ein Kolbenantrieb der Dosierpumpe entsprechend kleiner gewählt werden, was Vorteile bezüglich des Gewichtes und damit der bewegten Massen des Druckkopfes bewirken kann. Es kann auch eine Variante denkbar sein, welche durch entsprechende Gestaltung des Ventils und der Ansteuerung der Kolbenstangen einen kontinuierlichen Materialaustrag ohne expliziten Umschaltzeitpunkt erlaubt.

In jedem Fall können hierdurch die Vorteile eines einfach zu realisierenden Aufbaus mit wenigen Dichtflächen, eine Entlastung des Antriebes durch den unterstützenden Druck der Schmelze, geringe Umschaltzeiten, da das Entleeren der einen Kammer und das Befüllen der anderen Kammer parallel stattfinden sowie kürzere Wege und damit geringere Volumina zwischen den Kammervolumen und der Ausstoßöffnung der Druckdüse als Verschlussdüse teilweise oder vollständig erreicht werden.

Es ist auch eine Anordnung von mehreren Kolben und entsprechenden Zylindervolumen denkbar, bei welcher die Kolben parallel in einem kreisförmigen Muster angeordnet sind. Die Linearbewegung kann dann durch Anlenkung mit einer Taumel- oder Kurvenscheibe erfolgen, sodass sich immer mindestens ein Kolben in der Vorwärtsbewegung befindet und Material austrägt, während mindestens ein Kolben in der Rückwärtsbewegung ist und Material aus dem Plastifizierer nachfördert. Dadurch kann sich ebenfalls, bei entsprechendem Anlenkungswinkel, eine Unterstützung der zum Austrag benötigten Kraft durch den Druck der Schmelze aus der Plastifizierungseinheit realisieren lassen, wenn ggfs. auch nicht in vollem Maße wie bei der zuvor beschriebenen Anordnung. Die Ansteuerung der einzelnen Zylindervolumen kann etwa durch eine Art Ventilscheibe realisiert werden, welche entsprechende Bohrungen enthalten kann. Mit diesem Aufbau könnte sich ein kontinuierlicher und, bei entsprechender Ausführung der Anlenkung, pulsationsfreier Austrag realisieren lassen. Dadurch müsste im Prozess kein Zeitpunkt für eine Umschaltung des Ventils vorgesehen werden und es könnte ein kontinuierlicher Materialaustrag realisiert werden.

Mehrere Ausführungsbeispiele und weitere Vorteile der Erfindung werden nachstehend im Zusammenhang mit den folgenden Figuren rein schematisch dargestellt und näher erläutert. Darin zeigt:
- Fig. 1: eine seitliche Darstellung einer erfindungsgemäßen Druckvorrichtung als 3D-Drucker;
- Fig. 2: eine Schnittdarstellung einer erfindungsgemäßen Druckdüse gemäß eines ersten Ausführungsbeispiels in der Öffnungsposition;
- Fig. 3: die Darstellung der Fig. 2 in der Schließposition;
- Fig. 4: eine Schnittdarstellung einer erfindungsgemäßen Druckdüse gemäß eines zweiten Ausführungsbeispiels in der Öffnungsposition;
- Fig. 5: die Darstellung der Fig. 4 in der Schließposition;
- Fig. 6: eine Schnittdarstellung einer erfindungsgemäßen Druckdüse gemäß eines dritten Ausführungsbeispiels in der Öffnungsposition;
- Fig. 7: die Darstellung der Fig. 6 in der Schließposition;
- Fig. 8: eine Schnittdarstellung einer erfindungsgemäßen Druckdüse gemäß eines vierten Ausführungsbeispiels in der Öffnungsposition;
- Fig. 9: die Darstellung der Fig. 8 in der Schließposition;
- Fig. 10: eine Schnittdarstellung einer erfindungsgemäßen Druckdüse gemäß eines fünften Ausführungsbeispiels in der Öffnungsposition;
- Fig. 11: die Darstellung der Fig. 10 in der Schließposition; und
- Fig. 12: eine Schnittdarstellung einer erfindungsgemäßen Dosierpumpe.

Die o.g. Figuren werden in kartesischen Koordinaten betrachtet. Es erstreckt sich eine Längsrichtung (nicht dargestellt), welche auch als Tiefe oder als Länge bezeichnet werden kann. Senkrecht zur Längsrichtung erstreckt sich eine Querrichtung Y, welche auch als Breite Y bezeichnet werden kann. Senkrecht sowohl zur Längsrichtung als auch zur Querrichtung Y erstreckt sich eine vertikale Richtung Z, welche auch als Höhe Z bezeichnet werden kann. Die Längsrichtung und die Querrichtung Y bilden gemeinsam die Horizontale, welche auch als horizontale Ebene bezeichnet werden kann.

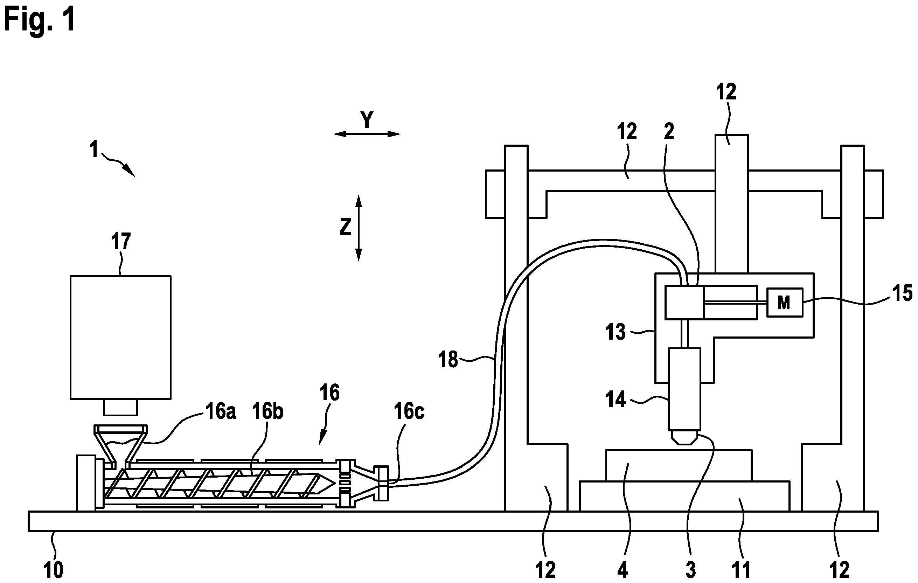

Fig. 1 zeigt eine seitliche Darstellung einer erfindungsgemäßen Druckvorrichtung 1 als 3D-Drucker 1. Der erfindungsgemäße 3D-Drucker 1 weist ein Gestell 10 auf, welches auch als Rahmen 10 bezeichnet werden kann. Mit dem Gestell 10 kann der 3D-Drucker 1 auf einem Untergrund (nicht dargestellt) aufgestellt werden, um betrieben zu werden. An dem Gestell 10 sind weitere Bauteile und Elemente des 3D-Druckers 1 angeordnet.

So ist in der Darstellung der Fig. 1 links eine Plastifizierungseinheit 16 in Form eines Plastifizierers 16 feststehend auf dem Gestell 10 angeordnet. Dem Plastifizierer 16 kann in der Höhe Z von oben aus einem Materialspeicher 17 ein zu plastifizierendes Material z. B. als Granulat oder dergleichen zugeführt werden, indem das Granulat z. B. eines Kunststoffs in einen Trichter 16a des Plastifizierers 16 fallengelassen und dort im Inneren des Plastifizierers 16 mittels einer Schnecke 16b durch Druck sowie zusätzliche Beheizung erwärmt und somit fließfähig gemacht werden kann. Das fließfähige Material kann dann über eine Auslassöffnung 16c bzw. über eine Düsenöffnung 16c des Plastifizierers 16 von dem Plastifizierer 16 abgegeben werden.

Auf der rechten Seite der Fig. 1 ist in der Höhe Z oben auf dem Gestell 10 eine horizontale Arbeitsfläche 11 angeordnet, welche auch als Druckbett 11 bezeichnet werden kann. Horizontal neben dem Druckbett 11 ist eine Druckkopfkinematik 12 angeordnet, welche aus nicht näher dargestellten vertikalen und horizontalen Antriebselementen besteht, welche gegenüber dem Gestell 10 sowie gegenüber einander vertikal und horizontal bewegt werden können. Mittels der Druckkopfkinematik 12 kann eine Drucckopfhalterung 13 in der Höhe Z oberhalb des Druckbetts 11 verfahren und positioniert werden. Die Druckkopfhalterung 13 ist dabei mittels eines schlauchartigen, beheizbaren Materialführungselements 18 in Form eines Heizschlauches 18 mit der Düsenöffnung 16c des Plastifizierers 16 derart verbunden, dass das fließfähige Material von dem Plastifizierer 16 über den Heizschlauch 18 an die Druckkopfhalterung 13 abgegeben werden kann.

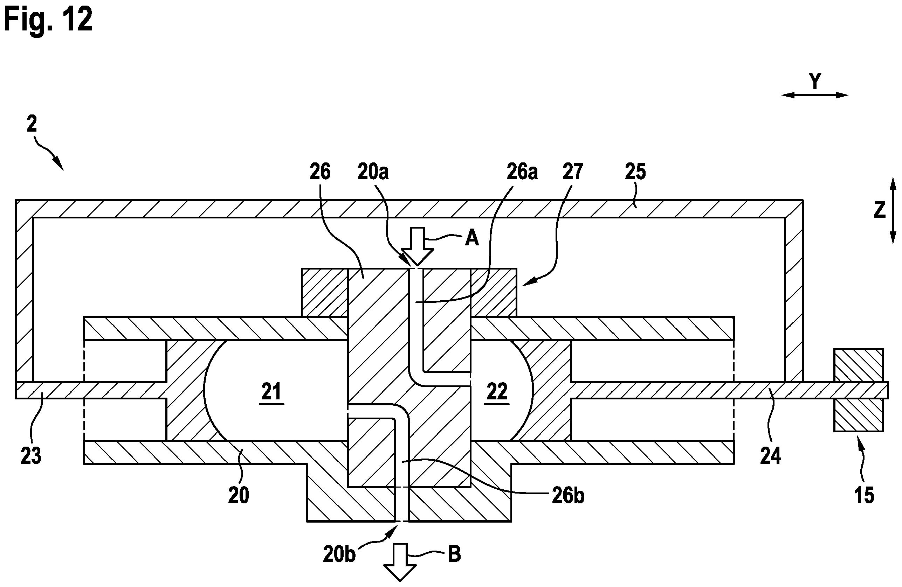

Innerhalb der Druckkopfhalterung 13 ist eine erfindungsgemäße Dosierpumpe 2 in Form eines Kolbenförderers 2 angeordnet, welcher das fließfähige Material mittels des Heizschlauches 18 zugeführt werden kann. Mittels der Dosierpumpe 2 kann das fließfähige Material mit einem vorbestimmten Druck an einen Druckkopf 14 abgegeben werden, wie weiter unten anhand der Fig. 12 noch näher beschrieben werden wird. Dies kann mittels des Drucks des fließfähigen Materials selbst sowie mittels des Drucks erfolgen, welcher in der Dosierpumpe 2 mittels eines Kolbenantriebs 15 der Dosierpumpe 2 erzeugt werden kann. Der Kolbenantrieb 15 ist ebenfalls an der Druckkopfhalterung 13 angeordnet.

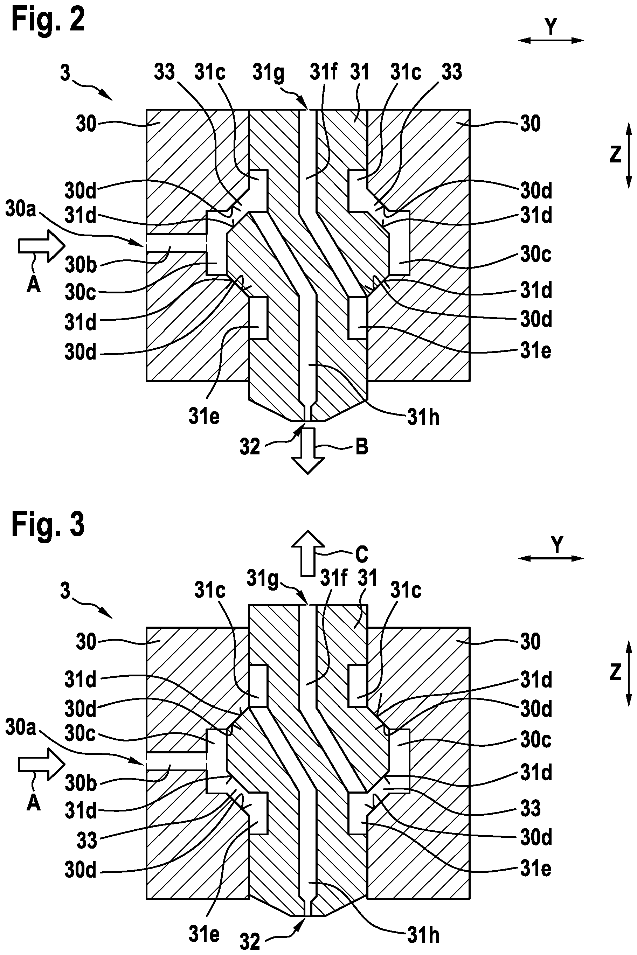

Der Druckkopf 14 kann das fließfähige Material in der Höhe Z nach unten auf das Druckbett 11 ausgeben bzw. ausstoßen, um auf dem Druckbett 11 in der Horizontalen sowie in der Höhe Z nach oben schichtweise ein Werkstück 4 durch Drucken auszubilden. Das Ausstoßen des fließfähigen Materials erfolgt mittels einer erfindungsgemäßen Druckdüse 3 des Druckkopfs 14, welche auch als Düse 3 des Drucckopfs 14 bezeichnet werden kann. Verschiedene Ausführungsbeispiele der Druckdüse 3 werden nachfolgenden anhand der Fig. 2 bis 11 näher erläutert werden.

In jedem Fall kann mittels des erfindungsgemäßen 3D-Druckers 1 darauf verzichtet werden, den Plastifizierer 16 mit dem Druckkopf 14 bzw. mit der Druckkopfhalterung 13 mitzubewegen, was die Masse der Druckkopfhalterung 13, welche von der Druckkopfkinematik 12 getragen und bewegt werden muss, deutlich verringern kann. Stattdessen kann der Plastifizierer 16 feststehend angeordnet und das fließfähige Material mittels des Heizschlauches 18 dem Druckkopf 14 fließfähig zugeführt werden. Dies kann auch die Verwendung von Granulat anstelle von drahtförmigen Materialien ermöglichen, wodurch die Auswahl verwendbarer Materialien erhöht und bzw. oder deren Kosten reduziert werden können. Der zum Drucken erforderliche bzw. optimale Druck des fließfähigen Materials innerhalb der Druckdüse 2 kann trotz des vergleichsweise weiten Weges des fließfähigen Materials durch den Heizschlauch 18 hindurch von der Dosierpumpe 2 sichergestellt werden.

Das Ausstoßen des fließfähigen Materials durch die Druckdüse 3 des Druckkopfes 14 kann erfindungsgemäß derart erfolgen, dass die Druckdüse 3 im Wesentlichen aus einem Druckdüsengestell 30 als Düsenkörper 30 und aus einem Druckdüsenkopf 31 als Düsennadel 31 besteht, vgl. Fig. 2 bis 11. Erfindungsgemäß ist das Druckdüsengestell 30 feststehend am Druckkopf 14 und der Druckdüsenkopf 31 relativ zum Druckdüsengestell 30 in der Höhe Z beweglich angeordnet. Eine Ausstoßöffnung 32 des Druckkopfes 14 als Düsenöffnung 32 des Druckkopfes 14 wird dabei von dem beweglichen Druckdüsenkopf 31 ausgebildet, so dass die Ausstoßöffnung 32 des Druckdüsenkopfes 31 gegenüber dem feststehenden Druckdüsengestell 30 in der Höhe Z bewegt werden kann.

Hierdurch kann durch eine Bewegung in der Höhe Z nach oben gleichzeitig von einer Öffnungsposition der Ausstoßöffnung 32 des Druckdüsenkopfes 31, welche ein Ausstoßen des fließfähigen Materials in der Höhe Z nach unten zum Druckbett 11 bzw. zum zu druckenden Werkstück 4 hin ermöglicht und dabei die Ausstoßöffnung 32 des Druckdüsenkopfes 31 in der Höhe Z näher am Druckbett 11 bzw. am zu druckenden Werkstück 4 positioniert, in eine Schließposition der Ausstoßöffnung 32 des Druckdüsenkopfes 31 gewechselt werden, welche ein Ausstoßen des fließfähigen Materials in der Höhe Z nach unten zum Druckbett 11 bzw. zum zu druckenden Werkstück 4 hin verhindert und dabei die Ausstoßöffnung 32 des Druckdüsenkopfes 31 in der Höhe Z weiter entfernt vom Druckbett 11 bzw. vom zu druckenden Werkstück 4 positioniert. Dabei kann durch die Bewegung des Druckdüsenkopfes 31 in der Höhe Z relativ zum Druckdüsengestell 30 zwischen der Öffnungsposition und der Schließposition gemeinsam ein Freigeben oder Verhindern des Ausstoßens des fließfähigen Materials in der Höhe Z nach unten hin sowie ein näheres oder weiter entferntes Beabstanden der Ausstoßöffnung 32 des Druckdüsenkopfes 31 zum Druckbett 11 bzw. zum zu druckenden Werkstück 4 erfolgen.

Das weiter entfernte Beabstanden des Druckdüsenkopfes 31 zum Druckbett 11 bzw. zum zu druckenden Werkstück 4 in der Schließposition der Ausstoßöffnung 32 des Druckdüsenkopfes 31 kann dafür sorgen, dass ein Kontakt zwischen der Ausstoßöffnung 32 des Druckdüsenkopfes 31 und dem Druckbett 11 bzw. dem zu druckenden Werkstück 4, insbesondere bei der Verfahrbewegung des Druckkopfes 14 in der Horizontalen, sicher verhindert werden kann, ohne dass hierzu der Druckkopf 14 als Ganzes in der Höhe Z bewegt werden muss. Dies kann den entsprechenden Aufwand vermeiden und dennoch das Druckbett 11 bzw. das zu druckenden Werkstück 4 vor einer Kollision mit der Ausstoßöffnung 32 des Druckdüsenkopfes 31 schützen. Diese Bewegung des Druckdüsenkopfes 31 in der Höhe Z gegenüber dem Druckdüsengestell 30 kann z. B. piezoelektrisch oder pneumatisch erfolgen (nicht dargestellt).

Die Beweglichkeit der Ausstoßöffnung 32 des Druckdüsenkopfes 31 in der Höhe Z gegenüber dem am Druckkopf feststehend angeordneten Druckdüsengestell 30 zwischen der Öffnungsposition und der Schließposition kann auf verschiedene Art und Weise konstruktiv ermöglicht werden, wie nachfolgend beispielhaft näher erläutert wird:
Fig. 2 zeigt eine Schnittdarstellung einer erfindungsgemäßen Druckdüse 3 gemäß eines ersten Ausführungsbeispiels in der Öffnungsposition. Fig. 3 zeigt die Darstellung der Fig. 2 in der Schließposition.

Das zuvor bereits erwähnte feststehende Druckdüsengestell 30 ist in diesem Fall außen um den in der Höhe Z relativ zum Druckdüsengestell 30 beweglichen und im Wesentlichen zylindrisch ausgebildeten Druckdüsenkopf 31 angeordnet. In der Darstellung der Fig. 2 und 3 links weist das Druckdüsengestell 30 eine Einlassöffnung 30a auf, welche das fließfähige Material von der Dosierpumpe 2 erhalten kann, wie zuvor beschrieben. Von der Einlassöffnung 30a erstreckt sich radial an Innen ein geradliniger zylindrischer Einlasskanal 30b in das Druckdüsengestell 30 hinein und geht in einen Einlassring 30c über, welcher sich ringförmig geschlossen um den Druckdüsenkopf 31 herum und in der Höhe Z beidseitig über den Einlasskanal 30b hinaus erstreckt. Die in der Höhe Z obere und untere Kante des Einlassrings 30c geht dabei jeweils schräg in einem Winkel von 45° konisch in die Durchgangsöffnung (nicht bezeichnet) des Druckdüsengestells 30 über, welche den Druckdüsenkopf 31 aufnimmt. Diese beiden konischen Flächen stellen zwei Dichtflächen 30d des Druckdüsengestells 30 dar.

Der Druckdüsenkopf 31 ist, wie bereits erwähnt, im Wesentlichen zylindrisch ausgebildet und in der Höhe Z relativ zum Druckdüsengestell 30 beweglich, z. B. mittels eines piezoelektrischen oder pneumatischen Antriebs (nicht dargestellt). Dabei weist der Druckdüsenkopf 31 in der Höhe Z etwa mittig einen trapezförmigen Vorsprung (nicht bezeichnet) auf, welcher in der Höhe Z oben und unten jeweils in einem Winkel von 45° konisch zu dem Einlassring 30c des Druckdüsengestells 30 hin zeigt. Diese beiden konischen Flächen stellen zwei Dichtflächen 31d des Druckdüsenkopfes 31 dar und entsprechend den beiden Dichtflächen 30d des Druckdüsengestells 30, so dass paarweise jeweils die obere bzw. untere Dichtfläche 31d des Druckdüsenkopfes 31 mit der korrespondierenden oberen bzw. unteren Dichtfläche 30d des Druckdüsengestells 30 dichtend aneinander anliegen und dichtend miteinander wirken kann.

Die in der Höhe Z obere Dichtflächen 31d des Druckdüsenkopfes 31 geht in der Höhe Z nach oben, dem Vorsprung abgewandt, in einen Einlassring 31c des Druckdüsenkopfes 31 über, welcher sich ringförmig geschlossen um den Druckdüsenkopf 31 herum radial nach außen offen und in der Höhe Z dem Vorsprung abgewandt über die obere Dichtflächen 31d des Druckdüsenkopfes 31 hinaus erstreckt. Der Einlassring 31c des Druckdüsenkopfes 31 ist an einer Stelle mit einem Ausstoßkanal 31h verbunden, welche sich zunächst schräg zur Mittelachse des Druckdüsenkopfes 31 und von dort geradlinig entlang der Mittelachse des Druckdüsenkopfes 31 in der Höhe Z nach unten zur Ausstoßöffnung 32 hin erstreckt. Die Ausstoßöffnung 32 des Druckdüsenkopfes 31 ist gegenüber dem Ausstoßkanal 31h verengt ausgebildet, wodurch eine Druckerhöhung des fließfähigen Materials unmittelbar vor dem Ausstoßen bewirkt werden kann.

Vergleichbar geht die in der Höhe Z untere Dichtflächen 31d des Druckdüsenkopfes 31 in der Höhe Z nach unten, dem Vorsprung abgewandt, in einen Auslassring 31e des Druckdüsenkopfes 31 über, welcher sich ebenfalls ringförmig geschlossen um den Druckdüsenkopf 31 herum radial nach außen offen und in der Höhe Z dem Vorsprung abgewandt über die untere Dichtflächen 31d des Druckdüsenkopfes 31 hinaus erstreckt. Der Auslassring 31e des Druckdüsenkopfes 31 ist an einer Stelle mit einem Auslasskanal 31f verbunden, welcher sich zunächst schräg zur Mittelachse des Druckdüsenkopfes 31 und von dort geradlinig entlang der Mittelachse des Druckdüsenkopfes 31 in der Höhe Z nach oben zu einer Auslassöffnung 31g des Druckdüsenkopfes 31 hin erstreckt. Die Auslassöffnung 31g des Druckdüsenkopfes 31 kann dabei mit einem Aufnahmeraum (nicht dargestellt) des Druckkopfes 14 verbunden sein, wo das fließfähige Material aufgenommen und gespeichert werden kann. Alternativ kann die Auslassöffnung 31g des Druckdüsenkopfes 31 mit einer Rückführung (nicht dargestellt) verbunden sein, um das fließfähige Material der Dosierpumpe 2 und von dort wieder der Einlassöffnung 30a des Druckdüsengestell 30 zuzuführen und erneut zu verwenden.

Alternativ könnte der Ausstoßkanal 31h auch im oberen Bereich Y-förmig ausgebildet sein und an zwei einander diametral gegenüberliegenden Stellen mit dem Einlassring 31c des Druckdüsenkopfes 31 verbunden sein. In diesem Fall wäre der Auslasskanal 31f des Druckdüsenkopfes 31 gegenüber dem Ausstoßkanal 31h des Druckdüsenkopfes 31 seitlich bzw. in der Umfangsrichtung versetzt anzuordnen. Wird auch der Auslasskanal 31f des Druckdüsenkopfes 31 Y-förmig ausgebildet, so dass der Auslasskanal 31f des Druckdüsenkopfes 31 an zwei einander diametral gegenüberliegenden Stellen mit dem Auslassring 31e des Druckdüsenkopfes 31 verbunden ist, so könnten die beiden Y-förmigen Abschnitte des Ausstoßkanals 31h des Druckdüsenkopfes 31 jeweils um 90° versetzt zu den beiden Y-förmigen Abschnitten des Auslasskanals 31f des Druckdüsenkopfes 31 angeordnet sein.

Soll nun ein Ausstoßen des fließfähigen Materials aus der Ausstoßöffnung 32 des Druckdüsenkopfes 31 erfolgen, wird der Druckdüsenkopf 31 in die untere Position als Öffnungsposition gebracht, siehe Fig. 2. Das fließfähige Material kann nun in einer Flussrichtung A, von der Dosierpumpe 2 mit einer vorbestimmten konstanten Strömungsgeschwindigkeit zugeführt, durch die Einlassöffnung 30a über den Einlasskanal 30b in den Einlassring 30c des Druckdüsengestells 30 strömen und sich dort ringförmig ausbreiten. Da in der unteren Position das obere Paar von Dichtflächen 30d, 31d des Druckdüsengestells 30 und des Druckdüsenkopfes 31 schräg zueinander beabstandet sind, bildet sich hier ein ringförmiger spaltartiger Übergangsbereich 33 aus, durch welchen hindurch das fließfähige Material von dem Einlassring 30c des Druckdüsengestells 30 in den Einlassring 31c des Druckdüsenkopfes 31 gelangen kann. Von dem Einlassring 31c des Druckdüsenkopfes 31 kann das fließfähige Material nun über den Ausstoßkanal 31h zur Ausstoßöffnung 32 des Druckdüsenkopfes 31 gelangen und dort in der Höhe Z nach unten aus der Ausstoßöffnung 32 des Druckdüsenkopfes 31 zum Druckbett 11 bzw. zu dem zu druckenden Werkstück 4 in einer Flussrichtung B gelangen. Dabei kann die Ausstoßöffnung 32 des Druckdüsenkopfes 31 mittels der Druckkopfkinematik 12 insbesondere in der Höhe Z derart gegenüber dem Druckbett 11 bzw. gegenüber dem zu druckenden Werkstück 4 positioniert werden, so dass der 3D-Druckprozess durchgeführt werden kann. Hierbei kann der Druckkopf 14 auch während des Ausstoßens des fließfähigen Materials in der Horizontalen bewegt werden, um das Werkstück 4 flächig auszubilden bzw. zu drucken.

Soll nun das Ausstoßen des fließfähigen Materials aus der Ausstoßöffnung 32 des Druckdüsenkopfes 31 zum Druckbett 11 bzw. zu dem zu druckenden Werkstück 4 hin unterbrochen werden, um z. B. den Druckkopf 14 ohne Materialausstoß insbesondere in der Horizontalen zu bewegen, so kann der Druckdüsenkopf 31 in der Höhe Z nach oben in die Schließposition verfahren werden, siehe Fig. 3. Während dieser Verfahrbewegung wird im gleichen Maße der Übergangsbereich 33 zwischen dem oberen Paar von Dichtflächen 30d, 31d des Druckdüsengestells 30 und des Druckdüsenkopfes 31 verringert und schließlich geschlossen wie gleichzeitig ein korrespondierender Übergangsbereich 33 zwischen dem unteren Paar von Dichtflächen 30d, 31d des Druckdüsengestells 30 und des Druckdüsenkopfes 31 geöffnet und vergrößert wird. Ist die Schließposition erreicht, so strömt das fließfähige Material vollständig in den Auslassring 31e des Druckdüsenkopfes 31 und von dort über den Auslasskanal 31f und die Auslassöffnung 31g des Druckdüsenkopfes 31 in einer Flussrichtung C z. B. in die zuvor beschriebene Rückführung.

Aufgrund des gleichmäßigen Übergangs der beiden sich gemeinsam schließenden bzw. öffnenden Übergangsbereiche 33 kann die Strömungsgeschwindigkeit des fließenden Materials beim Wechsel zwischen der Öffnungsposition und der Schließposition, und umgekehrt, konstant gehalten und hierdurch Druckschwankungen in der Strömung des fließenden Materials vermieden werden, was beim Übergangs aus der Schließposition in die Öffnungsposition ein gleichmäßiges Ausstoßen des fließfähigen Materials aus der Ausstoßöffnung 32 des Druckdüsenkopfes 31 gewährleisten kann. Dies kann einen übermäßigen Ausstoß zu Beginn eines Druckvorgangs verhindern, was sonst zu einem ungleichmäßigen Druck des Werkstücks 4 führen könnte. Dies kann auch dadurch begünstigt werden, dass sowohl der Ausstoßkanal 31h als auch der Auslasskanal 31f des Druckdüsenkopfes 31 einen vergleichbaren Strömungswiderstand für das fließfähige Material aufweisen.

Dabei wird durch die Bewegung des Druckdüsenkopfes 31 in der Höhe Z nach oben aus der Öffnungsposition in die Schließposition nicht nur das zuvor beschriebene Unterbrechen des Ausstoßens des fließfähigen Materials aus der Ausstoßöffnung 32 des Druckdüsenkopfes 31 bewirkt sondern gleichzeitig durch dieselbe Bewegung die Ausstoßöffnung 32 des Druckdüsenkopfes 31 zu dem Druckbett 11 bzw. zu dem zu druckenden Werkstück 4 beabstandet. Hierdurch kann, insbesondere bei einer nun erfolgenden horizontalen Bewegung des Druckkopfes 14, ein Kontakt der Ausstoßöffnung 32 des Druckdüsenkopfes 31 mit dem Druckbett 11 bzw. mit dem zu druckenden Werkstück 4 vermieden werden.

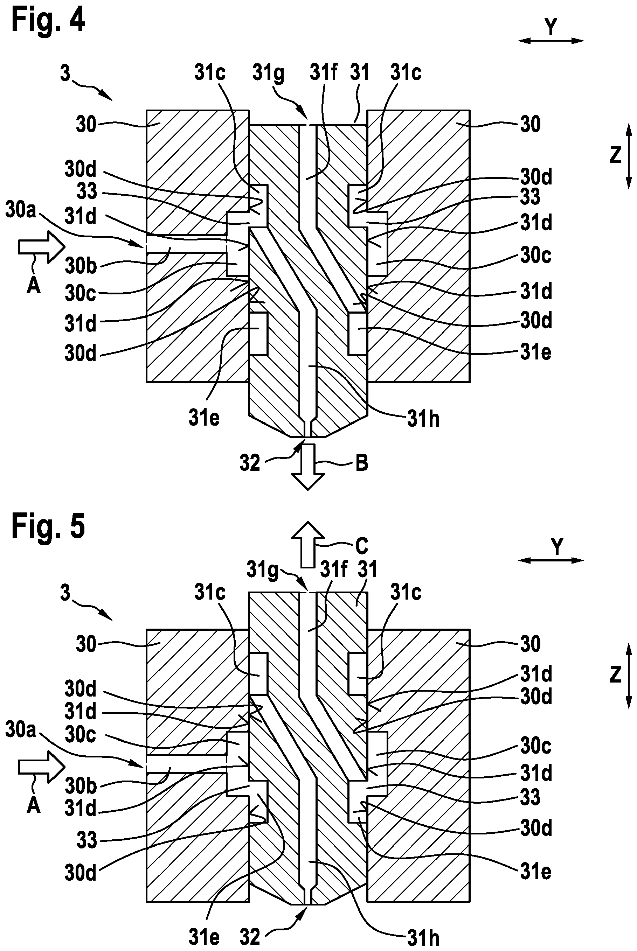

Fig. 4 zeigt eine Schnittdarstellung einer erfindungsgemäßen Druckdüse 3 gemäß eines zweiten Ausführungsbeispiels in der Öffnungsposition. Fig. 5 zeigt die Darstellung der Fig. 4 in der Schließposition. In diesem Fall ist der Druckdüsenkopf 31 vollständig zylindrisch ausgebildet. Hierdurch sind die beiden Paare von Dichtflächen 30d, 31d des Druckdüsengestells 30 und des Druckdüsenkopfes 31 senkrecht zueinander ausgerichtet und die Übergangsbereiche 33 werden als Durchtrittöffnungen anstelle von Durchtrittskanälen ausgebildet.

Betrachtet man das erste Ausführungsbeispiel der Fig. 2 und 3 im Vergleich zu dem zweiten Ausführungsbeispiel der Fig. 4 und 5, so können die beiden konusförmigen Paare von Dichtflächen 30d, 31d des Druckdüsengestells 30 und des Druckdüsenkopfes 31 des ersten Ausführungsbeispiels der Fig. 2 und 3 zu einer besseren Abdichtung führen, da bei dem zweiten Ausführungsbeispiel der Fig. 4 und 5 die Dichtwirkung dadurch verringert sein kann, dass lediglich eine Dichtwirkung durch die Passungskombination des Druckdüsenkopfes 31 gegenüber dessen Aufnahme des Druckdüsengestells 30 erreicht werden kann. Auch kann das Öffnen und Schließen der Übergangsbereiche 33 bei den beiden konusförmigen Paaren von Dichtflächen 30d, 31d des Druckdüsengestells 30 und des Druckdüsenkopfes 31 des ersten Ausführungsbeispiels der Fig. 2 und 3 mit einer kürzeren Bewegung als bei dem zweiten Ausführungsbeispiel der Fig. 4 und 5 erfolgen, was das Öffnen und Schließen der Übergangsbereiche 33 beschleunigen kann. Ferner kann der Aufwand zum Öffnen und Schließen der Übergangsbereiche 33 hinsichtlich der Länge der erforderlichen Bewegung und bzw. des Energieaufwands hierzu geringer sein.

Als nachteilig beim dem ersten Ausführungsbeispiel der Fig. 2 und 3 gegenüber dem zweiten Ausführungsbeispiel der Fig. 4 und 5 kann jedoch angesehen werden, dass die Anordnung des trapezförmigen Vorsprungs des Druckdüsenkopfes 31 innerhalb des Druckdüsengestells 30 eine mehrteilige Ausführung des Druckdüsengestells 30 erfordern kann, welche zu einem erhöhten Fertigungs- und Montageaufwand führen kann. Auch kann das Schließen des oberen Paares von Dichtflächen 30d, 31d des Druckdüsengestells 30 und des Druckdüsenkopfes 31 bei dem ersten Ausführungsbeispiel der Fig. 2 und 3 dazu führen, dass das sich im Übergangsbereich 33 befindliche fließfähige Material durch die Bewegung des Druckdüsenkopfes 31 über dessen Auslasskanal 31h und dessen Ausstoßöffnung 32 aus dieser in der Höhe Z nach unten hinaus in der Flussrichtung B ungewollt ausgestoßen werden kann, was z. B. das Werkstück 4 verändern kann. Dies kann durch die Ausbildung der Übergangsbereiche 33 als Durchtrittöffnungen anstelle von Durchtrittskanälen bei dem zweiten Ausführungsbeispiel der Fig. 4 und 5 verhindert werden.

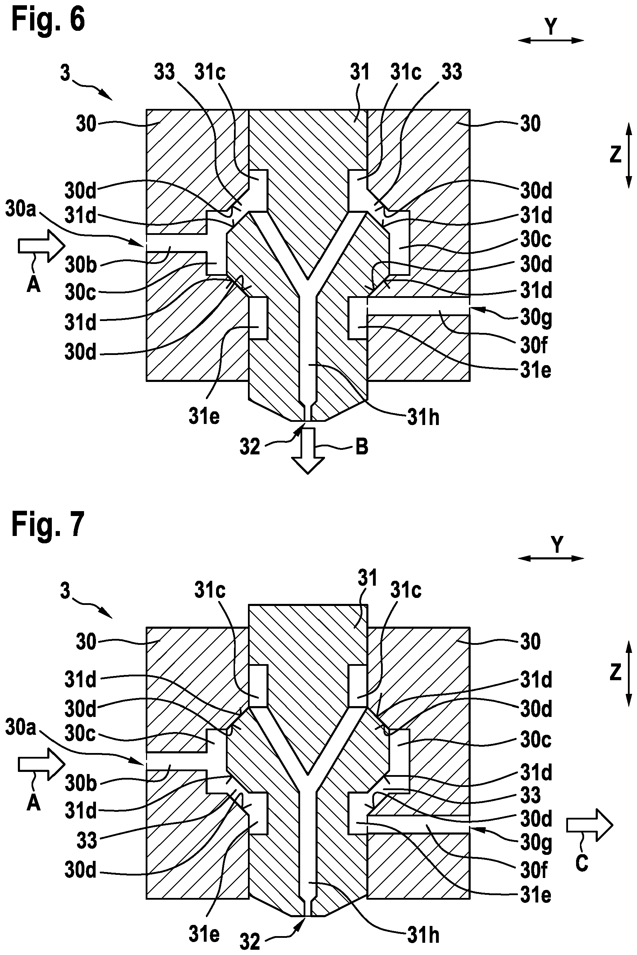

Fig. 6 zeigt eine Schnittdarstellung einer erfindungsgemäßen Druckdüse 3 gemäß eines dritten Ausführungsbeispiels in der Öffnungsposition. Fig. 7 zeigt die Darstellung der Fig. 6 in der Schließposition.

Das dritte Ausführungsbeispiel der Fig. 6 und 7 entspricht dem ersten Ausführungsbeispiel der Fig. 2 und 3 mit dem Unterschied, dass in diesem Fall das Druckdüsengestell 30 einen Auslasskanal 30f aufweist, welcher zu einer Auslassöffnung 30g führt, von welcher das fließfähige Material in der Flussrichtung C z. B. in die zuvor beschriebene Rückführung strömen kann. Dabei ist der Auslasskanal 30f des Druckdüsengestells 30 radial nach außen zeigend derart in der Höhe Z an einer Stelle unterhalb der unteren Dichtfläche 30d des Druckdüsengestells 30 angeordnet, so dass das fließfähige Material in der Schließstellung des Druckdüsenkopfes 31 aus dem Auslassring 31e des Druckdüsenkopfes 31 in den Auslasskanal 30f des Druckdüsengestells 30 gelangen kann. Dies kann eine alternative Variante darstellen, das fließfähige Material in der Schließstellung des Druckdüsenkopfes 31 aus der Druckdüse 3 abzuführen.

In diesem Fall kann innerhalb des Druckdüsenkopfes 31 dessen Ausstoßkanal 31h Y-förmig ausgebildet sein, um den Einlassring 31c des Druckdüsenkopfes 31 an zwei Stellen mit der Ausstoßöffnung 32 zu verbinden. Dies kann eine gleichmäßigere Strömung des fließfähigen Materials zur Ausstoßöffnung 32 des Druckdüsenkopfes 31 hin bewirken. Auch kann hierdurch die Herstellung des Druckdüsenkopfes 31, insbesondere durch die Reduzierung von Bohrungen, vereinfacht werden.

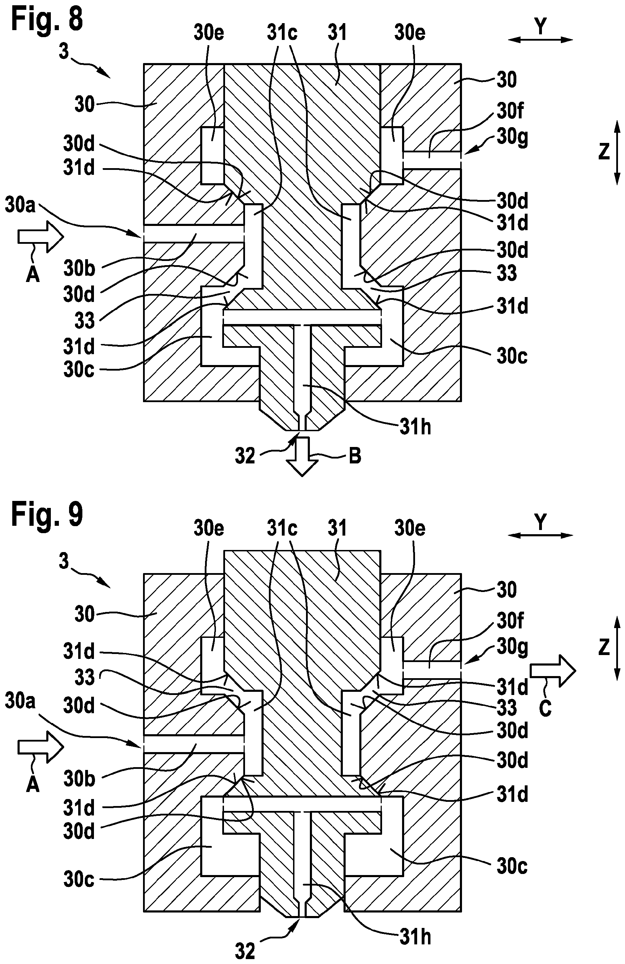

Fig. 8 zeigt eine Schnittdarstellung einer erfindungsgemäßen Druckdüse 3 gemäß eines vierten Ausführungsbeispiels in der Öffnungsposition. Fig. 9 zeigt die Darstellung der Fig. 8 in der Schließposition.

In diesem Fall ragt der Einlasskanal 30b des Druckdüsengestells 30 trapezförmig zu dem Druckdüsenkopf 31 hin, so dass die Dichtflächen 30d des Druckdüsengestells 30 in der Höhe Z oberhalb und unterhalb des Einlasskanals 30b des Druckdüsengestells 30 jeweils in einem 45°-Winkel ausgebildet werden. An die obere Dichtfläche 30d des Druckdüsengestells 30 schließt sich ein Auslassring 30e des Druckdüsengestells 30 an, welcher sich ringförmig geschlossen um den Druckdüsenkopf 31 herum radial nach innen offen erstreckt. In der Darstellung der Fig. 8 und 9 rechts geht der Auslassring 30e des Druckdüsengestells 30 an einer Stelle in den Auslasskanal 30f des Druckdüsengestells 30 über, vgl. das dritte Ausführungsbeispiel der Fig. 6 und 7. Die untere Dichtfläche 30d des Druckdüsengestells 30 ist entsprechend in einem 45°-Winkel unterhalb des trapezförmigen Vorsprungs des Druckdüsengestells 30 ringförmig geschlossen ausgebildet.

Der Druckdüsenkopf 31 ist korrespondierend ausgebildet und weist den Einlasskanal 31c auf, welcher über einen T-förmigen Ausstoßkanal 31h mit der Ausstoßöffnung 32 des Druckdüsenkopfes 31 wie zuvor beschrieben verbunden ist.

In diesem Fall kann das fließfähige Material über den Einlasskanal 30b des Druckdüsengestells 30 in dessen Einlassring 30c gelangen, welcher im Wesentlichen durch die Flächen des Druckdüsenkopfes 31 gebildet wird, aber funktionell und zum besseren Vergleich mit den vorangehenden Ausführungsbeispielen dem Druckdüsengestell 30 zugeordnet werden kann. In der Öffnungsposition der Fig. 8 liegt das obere Paar von Dichtflächen 30d, 31d des Druckdüsengestells 30 und des Druckdüsenkopfes 31 flächig dichtend aneinander an und das untere Paar von Dichtflächen 30d, 31d des Druckdüsengestells 30 und des Druckdüsenkopfes 31 bildet den Übergangsbereich 33 aus. Entsprechend kann das fließfähige Material von dem Einlassring 30c des Druckdüsengestells 30 durch den Übergangsbereich 33 zwischen den unteren Dichtflächen 30d, 31d des Druckdüsengestells 30 und des Druckdüsenkopfes 31 in den Einlassring 31c des Druckdüsenkopfes 31 gelangen, welcher nicht nur ringförmig geschlossen um den Druckdüsenkopf 31 herum sondern auch in der Höhe Z zwischen dem Druckdüsengestell 30 und dem Druckdüsenkopf 31 ausgebildet wird. Über den T-förmigen Ausstoßkanal 31h des Druckdüsenkopfes 31 kann das fließfähige Material dann zur Ausstoßöffnung 32 des Druckdüsenkopfes 31 gelangen und wie zuvor beschrieben in der Höhe Z nach unten hin ausgestoßen werden.

Wird nun der Druckdüsenkopf 31 in der Höhe Z nach oben in die Schließposition bewegt, wird, wie bei dem ersten Ausführungsbeispiel der Fig. 2 und 3 beschrieben, der Übergangsbereich 33 zwischen den unteren Dichtflächen 30d, 31d des Druckdüsengestells 30 und des Druckdüsenkopfes 31 in gleichem Maße verringert und schließlich geschlossen wie zeitgleich der Übergangsbereich 33 zwischen den oberen Dichtflächen 30d, 31d des Druckdüsengestells 30 und des Druckdüsenkopfes 31 geöffnet und vergrößert wird. Ist die Schließposition erreicht, so kann das fließfähige Material über den Auslassring 30e in den Auslasskanal 30f des Druckdüsengestells 30 gelangen und aus der Druckdüse 3 abgeführt werden.

Vorteilhaft ist bei diesem vierten Ausführungsbeispiel der Fig. 8 und 9, dass auch in diesem Fall durch die konusförmigen unteren und oberen Dichtflächen 30d, 31d des Druckdüsengestells 30 und des Druckdüsenkopfes 31 eine sehr wirkungsvolle Abdichtung erzielt werden kann, wenngleich dies einen höheren konstruktiven sowie Herstellungs- und Montageaufwand verursachen kann.

Vorteilhaft gegenüber den bisher betrachteten drei Ausführungsbeispielen der Fig. 2 bis 7 ist bei dem vierten Ausführungsbeispiel der Fig. 8 und 9, dass durch die Bewegung des Druckdüsenkopfes 31 in der Höhe Z nach oben von der Öffnungsposition in die Schließposition neben dem Schließen des Übergangsbereichs 33 zwischen den unteren Dichtflächen 30d, 31d des Druckdüsengestells 30 und des Druckdüsenkopfes 31 gleichzeitig eine Vergrößerung des Volumens des Einlassrings 31c des Druckdüsenkopfes 31 erfolgt. Somit kann das fließfähige Material, welches bei der Schließbewegung von der Öffnungsposition in die Schließposition aus dem sich schließenden Übergangsbereich 33 zwischen den unteren Dichtflächen 30d, 31d des Druckdüsengestells 30 und des Druckdüsenkopfes 31 in den Einlassring 31c des Druckdüsenkopfes 31 gedrückt wird, von dem sich zeitgleich dort vergrößernden Volumen des Einlassrings 31c des Druckdüsenkopfes 31 zumindest teilweise bis vollständig aufgenommen werden. Dies kann einen ungewollten Ausstoß des fließfähigen Materials während der Schließbewegung reduzieren oder sogar vollständig verhindern. Ggfs. kann die Vergrößerung des Einlassrings 31c des Druckdüsenkopfes 31 derart bemessen werden, dass sogar das fließfähige Material aus dem Ausstoßkanal 31h teilweise in den Einlassring 31c des Druckdüsenkopfes 31 zurückgesogen werden kann, was ein ungewolltes Ausstoßen des fließfähigen Materials bei der Schließbewegung noch wirkungsvoller verhindern kann.

Vorteilhaft ist bei dem vierten Ausführungsbeispiel auch, dass das untere Paar von Dichtflächen 30d, 31d des Druckdüsengestells 30 und des Druckdüsenkopfes 31 in der Öffnungsposition den Übergangsbereich 33 ausbildet, welcher das fließfähige Material der Ausstoßöffnung 32 des Druckdüsenkopfes 31 zuführt. Hierdurch kann der Weg des fließfähigen Materials durch die Druckdüse 3 hindurch zur Ausstoßöffnung 32 des Druckdüsenkopfes 31 hin verkürzt werden. Dies reduziert auch das Volumen des fließfähigen Materials zwischen dem Übergangsbereich 33 bzw. zwischen dem unteren Paar von Dichtflächen 30d, 31d des Druckdüsengestells 30 und des Druckdüsenkopfes 31 und dessen Ausstoßöffnung 32 in der Öffnungsposition und damit auch die Einflüsse von Druckänderungen und bzw. oder Wärmeausdehnungen des dort befindlichen fließfähigen Materials, welche auch zu einem ungewollten Ausstoß des fließfähigen Materials aus der Ausstoßöffnung 32 des Druckdüsenkopfes 31 in der Schließposition führen könnten.

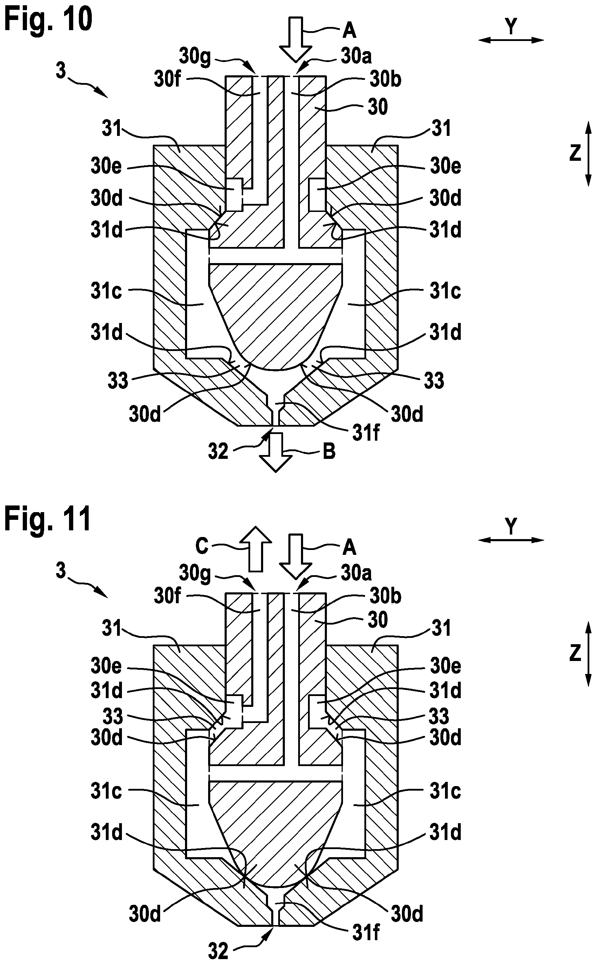

Fig. 10 zeigt eine Schnittdarstellung einer erfindungsgemäßen Druckdüse 3 gemäß eines fünften Ausführungsbeispiels in der Öffnungsposition. Fig. 11 zeigt die Darstellung der Fig. 10 in der Schließposition.

Im Gegensatz zu den vorangehenden vier Ausführungsbeispielen ist bei dem fünften Ausführungsbeispiel der Fig. 10 und 11 das feststehende Druckdüsengestell 30 innenliegend und der relativ hierzu in der Höhe Z bewegliche Druckdüsenkopf 31 außenliegend sowie das Druckdüsengestell 30 im Wesentlichen zylindrisch umgebend angeordnet. Entsprechend führt der Einlasskanal 30b zunächst senkrecht in der Höhe Z von oben in das Druckdüsengestell 30 hinein und verzweigt sich dann T-förmig in der Breite Y. Parallel hierzu verläuft der Auslasskanal 30f des Druckdüsengestells 30 in der Höhe Z nach oben, welcher an einer Stelle mit dem ringförmig geschlossen und nach radial außen offen ausgebildeten Auslassring 30e des Druckdüsengestells 30 verbunden ist.

In der Höhe Z nach unten hin ist das Druckdüsengestell 30 kegelförmig und an der Spitze (nicht bezeichnet) abgerundet ausgebildet. Das Druckdüsengestell 30 wird im Bereich der abgerundeten Spitze von dem Druckdüsenkopf 31 derart umschlossen, dass sich dort der Einlassring 31c des Druckdüsenkopfes 31 ausgebildet. Nahe der abgerundeten Spitze des kegelförmigen unteren Endes des Druckdüsengestells 30 ist das untere Paar von Dichtflächen 30d, 31d des Druckdüsengestells 30 und des Druckdüsenkopfes 31 ausgebildet, welchem sich der Ausstoßkanal 31h des Druckdüsenkopfes 31 und dann auf der Seite des Druckdüsenkopfes 31 die Ausstoßöffnung 32 anschließt. Dies führt zu einem minimalen Volumen des Ausstoßkanals 31h des Druckdüsenkopfes 31.

Am oberen Ende des Einlassrings 31c des Druckdüsenkopfes 31 ist das obere Paar von Dichtflächen 30d, 31d des Druckdüsengestells 30 und des Druckdüsenkopfes 31 konusförmig ausgebildet, vergleichbar dem ersten, dritte und vierten Ausführungsbeispielen der Fig. 2 und 3, Fig. 6 und 7 sowie Fig. 8 und 9 zuvor.

In diesem Fall kann das fließfähige Material durch den Einlasskanal 30b des Druckdüsengestells 30 in den Einlassring 31c des Druckdüsenkopfes 31 sowohl in der Öffnungsposition der Fig. 10 als auch in der Schließposition der Fig. 11 einströmen. In der Öffnungsposition der Fig. 10 liegen dabei die oberen Dichtflächen 30d, 31d des Druckdüsengestells 30 und des Druckdüsenkopfes 31 flächig konusförmig aneinander an und verschließen hierdurch den Auslasskanal 30f des Druckdüsengestells 30. Gleichzeitig sind die unteren Dichtflächen 30d, 31d des Druckdüsengestells 30 und des Druckdüsenkopfes 31 zueinander beabstandet und bilden einen ringförmig um die abgerundete Kegelspitze des Druckdüsengestells 30 umlaufenden Übergangsbereich 33 als Durchtrittöffnung aus, durch welchen hindurch das fließfähige Material über den kurzen Ausstoßkanal 31h zur Ausstoßöffnung 32 des Druckdüsenkopfes 31 gelangen und dort wie zuvor beschrieben ausgestoßen werden kann.

In der Schließposition liegen die unteren Dichtflächen 30d, 31d des Druckdüsengestells 30 und des Druckdüsenkopfes 31 aneinander an. Gleichzeitig wird, vergleichbar wie zuvor beschrieben, zwischen den oberen Dichtflächen 30d, 31d des Druckdüsengestells 30 und des Druckdüsenkopfes 31 ein Übergangsbereich 33 gebildet, so dass das fließfähige Material über den Auslassring 30e in den Auslasskanal 30f des Druckdüsengestells 30 strömen kann.

Der Ausstoßkanal 31h des Druckdüsenkopfes 31 weist dabei ein derart geringes Volumen auf, dass die Einflüsse von Druckänderungen und bzw. oder Wärmeausdehnungen auf das dort befindliche fließfähige Material so gering sein können, dass hierdurch ein ungewollter Ausstoß des fließfähigen Materials aus der Ausstoßöffnung 32 des Druckdüsenkopfes 31 in der Schließposition nicht zu erwarten ist. Nachteiligerweise kann jedoch die Schließbewegung zu einem Ausstoß von fließfähigem Material führen.

Fig. 12 zeigt eine Schnittdarstellung einer erfindungsgemäßen Dosierpumpe 2. Die Dosierpumpe 2 ist als Kolbenförderer 2 umgesetzt. Die Dosierpumpe 2 weist eine Einlassöffnung 20a und eine Auslassöffnung 20b auf. Über die Einlassöffnung 20a kann das fließfähige Material von dem Heizschlauch 18 sowie von dem Rücklauf (nicht dargestellt) in die Dosierpumpe 2 gelangen und über die Auslassöffnung 20b an die Druckdüse 3 mit vorbestimmter konstanter Fördergeschwindigkeit abgegeben werden.

Die Dosierpumpe 2 weist ein Dosierpumpengehäuse 20 auf, welches sich im Wesentlichen in der Breite Y erstreckt und in der Höhe Z nach unten zeigend die Auslassöffnung 20b aufweist. Seitlich in der Breite Y sind zwei Durchgangsöffnungen (nicht bezeichnet) in dem Dosierpumpengehäuse 20 ausgebildet, welche jeweils von außen einen in der Breite Y beweglichen Kolben 23, 24 aufnehmen. In der Breite Y mittig nimmt das Dosierpumpengehäuse 20 in der Höhe Z von oben ein zylindrisches Ventilelement 26 in Form eines Drehventils 26 auf, welches um seine Hochachse wenigstens um 180° hin und her gedreht werden kann. Innerhalb des Dosierpumpengehäuses 20 wird durch das Ventilelement 26 und den linken Kolben 23 ein erstes Kammervolumen 21 und durch das Ventilelement 26 und den rechten Kolben 24 ein zweites Kammervolumen 22 eingeschlossen.

Das Ventilelement 26 weist in der Höhe Z oben die Einlassöffnung 20a auf, welcher sich ein Einlasskanal 26a zuerst senkrecht nach unten und dann, in der Darstellung der Fig. 12, nach rechts verlaufend anschließt. Ein Auslasskanal 26b verläuft, in der Darstellung der Fig. 12, zuerst horizontal und anschließend in der Höhe Z nach unten, wo der Auslasskanal 26b in die Auslassöffnung 20b übergeht. In der Darstellung der Fig. 12 ist somit das erste Kammervolumen 21 über den Auslasskanal 26b des Ventilelements 26 mit der Auslassöffnung 20b der Dosierpumpe 2 verbunden, so dass dort aufgenommenes fließfähiges Material von der Dosierpumpe 2 an die Druckdüse 3 abgegeben werden kann. Gleichzeitig ist das zweite Kammervolumen 22 über den Einlasskanal 26a des Ventilelements 26 mit der Einlassöffnung 20a der Dosierpumpe 2 verbunden, so dass fließfähiges Material von dem Heizschlauch 18 in das zweite Kammervolumen 22 gelangen und dort aufgenommen werden kann. Durch Drehen des Ventilelements 26 mittels eines Ventilantriebs 27 kann dies hinsichtlich der beiden Kammervolumen 21, 22 umgekehrt erfolgen.

Die beiden Kolben 23, 24 sind außerhalb der beiden Kammervolumen 21, 22 mittels einer Kolbenverbindung 25 in Form einer Zugstrebe 25 feststehend miteinander verbunden, so dass die beiden Kolben 23, 24 nur gemeinsam in derselben Richtung in der Breite Y bewegt werden können. Die Summe der beiden Kammervolumen 21, 22 ist somit konstant. Die Bewegung der beiden gekoppelten Kolben 23, 24 kann zum einen mittels des bereits erwähnten Kolbenantriebs 15 erfolgen. Zum anderen kann das z. B. in das zweite Kammervolumen 22 einströmende fließfähige Material den entsprechenden Kolben 24 zusätzlich nach außen bzw. in der Breite Y nach rechts drücken, so dass der Kolbenantrieb 15 teilweise von dieser Kraft entlastet wird. Beide Kräfte ziehen den gegenüberliegenden Kolben 23 des ersten Kammervolumens 21 zum Ventilelement 26 hin, wodurch das im ersten Kammervolumen 21 befindliche fließfähige Material in den Auslasskanal 26b gefördert wird.

### BEZUGSZEICHENLISTE (Teil der Beschreibung)

- A: Flussrichtung des einströmenden fließfähigen Materials
- B: Flussrichtung des ausströmenden fließfähigen Materials
- C: Flussrichtung des zurückströmenden fließfähigen Materials

- Y: Querrichtung; Breite
- Z: vertikale Richtung; Höhe

- 1: Druckvorrichtung; 3D-Drucker
- 10: Gestell; Rahmen
- 11: (horizontale) Arbeitsfläche; Druckbett
- 12: Druckkopfkinematik
- 13: Druckkopfhalterung
- 14: Druckkopf
- 15: Kolbenantrieb der Dosierpumpe 2
- 16: Plastifizierungseinheit; Plastifizierer
- 16a: Trichter der Plastifizierungseinheit 16
- 16b: Schnecke der Plastifizierungseinheit 16
- 16b: Ausstoßöffnung bzw. Düsenöffnung der Plastifizierungseinheit 16
- 17: Materialspeicher
- 18: (schlauchartiges) Materialführungselement; Heizschlauch

- 2: Dosierpumpe; Kolbenförderer
- 20: Dosierpumpengehäuse
- 20a: Einlassöffnung der Dosierpumpe 2
- 20b: Auslassöffnung der Dosierpumpe 2
- 21: erstes Kammervolumen
- 22: zweites Kammervolumen
- 23: Kolben des ersten Kammervolumens 21
- 24: Kolben des zweiten Kammervolumens 22
- 25: Kolbenverbindung; Zugstrebe
- 26: Ventilelement; Drehventil
- 26a: Einlasskanal des Ventilelements 26
- 26b: Auslasskanal des Ventilelements 26
- 27: Ventilantrieb
- 3: Druckdüse; Düse
- 30: Druckdüsengestell; Düsenkörper
- 30a: Einlassöffnung des Druckdüsengestells 30
- 30b: Einlasskanal des Druckdüsengestells 30
- 30c: Einlassring des Druckdüsengestells 30
- 30d: Dichtflächen des Druckdüsengestells 30
- 30e: Auslassring des Druckdüsengestells 30
- 30f: Auslasskanal des Druckdüsengestells 30
- 30g: Auslassöffnung des Druckdüsengestells 30
- 31: Druckdüsenkopf; Düsennadel
- 31c: Einlassring des Druckdüsenkopfes 31
- 31d: Dichtflächen des Druckdüsenkopfes 31
- 31e: Auslassring des Druckdüsenkopfes 31
- 31f: Auslasskanal des Druckdüsenkopfes 31
- 31g: Auslassöffnung des Druckdüsenkopfes 31
- 31h: Ausstoßkanal
- 32: Ausstoßöffnung; Düsenöffnung
- 33: Übergangsbereich

- 4: Werkstück

## Patentansprüche

1. Druckvorrichtung (1), vorzugsweise 3D-Drucker (1),
mit wenigstens einer Druckdüse (3), welche ausgebildet ist, ein fließfähiges Material durch wenigstens eine Ausstoßöffnung (32) hindurch in Richtung einer, vorzugsweise horizontalen, Arbeitsfläche (11) auszustoßen,
wobei die Druckdüse (3)
ein feststehendes Druckdüsengestell (30) und
einen relativ zum Druckdüsengestell (30), vorzugsweise in der Höhe (Z), beweglichen Druckdüsenkopf (31) mit der Ausstoßöffnung (32)
aufweist,
wobei die Druckdüse (3) ausgebildet ist, den Druckdüsenkopf (31) relativ zum Druckdüsengestell (30), vorzugsweise in der Höhe (Z), zwischen
einer Öffnungsposition, in welcher ein Fließen des fließfähigen Materials durch die Ausstoßöffnung (32) hindurch zugelassen wird, und
einer Schließposition, in welcher ein Fließen des fließfähigen Materials durch die Ausstoßöffnung (32) hindurch nicht zugelassen wird,
mittels eines Antriebs, vorzugsweise mittels eines piezoelektrischen oder pneumatischen Antriebs, zu bewegen,
wobei die Ausstoßöffnung (32) des Druckdüsenkopfs (31) in der Schließposition weiter zu der Arbeitsfläche (11) beabstandet ist als in der Öffnungsposition,
**dadurch gekennzeichnet, dass**
das Druckdüsengestell (30) wenigstens zwei Dichtflächen (30d) und der Druckdüsenkopf (31) wenigstens zwei Dichtflächen (31d) aufweist,
welche jeweils einander paarweise derart gegenüberliegend ausgebildet sind, so dass
in der Öffnungsposition
das eine Paar von Dichtflächen (30d, 31d) zueinander beabstandet ist und zwischen sich einen Übergangsbereich (33) bildet, durch welchen hindurch das Fließen des fließfähigen Materials zur Ausstoßöffnung (32) hin zugelassen wird, und
das andere Paar von Dichtflächen (30d, 31d) miteinander abdichtet, so dass das Flie-ßen des fließfähigen Materials zu einer Auslassöffnung (30g; 31g) hin zwischen den beiden Dichtflächen (30d, 31d) hindurch nicht zugelassen wird, und
in der Schließposition
das eine Paar von Dichtflächen (30d, 31d) miteinander abdichtet, so dass das Fließen des fließfähigen Materials zur Ausstoßöffnung (32) hin zwischen den beiden Dichtflächen (30d, 31d) hindurch nicht zugelassen wird, und
das andere Paar von Dichtflächen (30d, 31d) zueinander beabstandet ist und zwischen sich einen Übergangsbereich (33) bildet, durch welchen hindurch das Fließen des fließfähigen Materials zu der Auslassöffnung (30g; 31g) hin zugelassen wird.

2. Druckvorrichtung (1) nach Anspruch 1, **dadurch gekennzeichnet, dass**
die beiden Paare von Dichtflächen (30d, 31d) jeweils ausgebildet sind, einander in der Bewegungsrichtung flächig oder linienförmig zu berühren, oder
die beiden Paare von Dichtflächen (30d, 31d) jeweils schräg oder rechtwinkelig zur Bewegungsrichtung des Druckdüsenkopfs (31) gegenüber dem Druckdüsengestell (30) zueinander ausgebildet sind.

3. Druckvorrichtung (1) nach einem der vorangehenden Ansprüche, **gekennzeichnet durch**
wenigstens einen Aufnahmeraum, vorzugsweise eines Druckkopfes (14), welcher ausgebildet ist, das fließfähige Material von der Auslassöffnung (30g; 31g) der Druckdüse (3) aufzunehmen, und/oder
wenigstens eine Rückführung, vorzugsweise eines Druckkopfes (14), welche ausgebildet ist, das fließfähige Material von der Auslassöffnung (30g; 31g) der Druckdüse (3) zu erhalten und einer Einlassöffnung (30a) der Druckdüse (3) zuzuführen.

4. Druckvorrichtung (1) nach einem der vorangehenden Ansprüche, **dadurch gekennzeichnet, dass** die Übergänge der beiden Paare von Dichtflächen (30d, 31d) jeweils zueinander ausgebildet sind, das Fließen des fließfähigen Materials konstant zu halten.

5. Druckvorrichtung (1) nach einem der vorangehenden Ansprüche, **dadurch gekennzeichnet, dass**
das Druckdüsengestell (30) und der Druckdüsenkopf (31)
zwischen einem sich in der Öffnungsposition zwischen dem Druckdüsengestell (30) und dem Druckdüsenkopf (31) ausbildenden Übergangsbereich (33) und der Auslassöffnung (30g; 31g) und
zwischen einem sich in der Schließposition zwischen dem Druckdüsengestell (30) und dem Druckdüsenkopf (31) ausbildenden Übergangsbereich (33) und der Ausstoßöffnung (32)
zumindest im Wesentlichen den gleichen Strömungswiderstand für das fließfähige Material aufweist.

6. Druckvorrichtung (1) nach einem der vorangehenden Ansprüche, **dadurch gekennzeichnet, dass** die Ausstoßöffnung (32) verengt ausgebildet ist.

7. Druckvorrichtung (1) nach einem der vorangehenden Ansprüche, **gekennzeichnet durch**
wenigstens eine Dosierpumpe (2), welche ausgebildet ist, das fließfähige Material durch eine Einlassöffnung (20a) hindurch zugeführt zu bekommen und durch eine Auslassöffnung (20b) hindurch der Druckdüse (3) zuzuführen,
wobei die Dosierpumpe (2) wenigstens ein erstes Kammervolumen (21) und ein zweites Kammervolumen (22) aufweist, welche jeweils alternativ zueinander mit der Einlassöffnung (20a) oder mit der Auslassöffnung (20b) das fließfähige Material fördernd verbunden werden können.

8. Druckvorrichtung (1) nach Anspruch 7, **dadurch gekennzeichnet, dass**
die beiden Kammervolumen (21, 22) einander geradlinig gegenüberliegend angeordnet sind,
wobei die beiden Kammervolumen (21, 22) einander zugewandt durch ein Ventilelement (26) von einander getrennt sind,
wobei die beiden Kammervolumen (21, 22) einander abgewandt durch jeweils einen Kolben (23, 24) begrenzt werden,
wobei die beiden Kolben (23, 24) mittels einer Kolbenverbindung (25) feststehend miteinander verbunden sind, um gemeinsam in derselben Richtung translatorisch bewegt zu werden.

9. Druckvorrichtung (1) nach Anspruch 8, **dadurch gekennzeichnet, dass**
die beiden Kolben (23, 24) ausgebildet sind, mittels eines Kolbenantriebs (15) und mittels des Drucks des fließfähigen Materials gemeinsam in derselben Richtung translatorisch bewegt zu werden.

10. Druckvorrichtung (1) nach Anspruch 8 oder 9, **dadurch gekennzeichnet, dass**
das Ventilelement (26) ausgebildet ist, mittels eines Ventilantriebs (27) senkrecht zur translatorischen Bewegungsrichtung der beiden Kolben (23, 24) gedreht zu werden.

11. Druckvorrichtung (1) nach einem der Ansprüche 8 bis 10, **dadurch gekennzeichnet, dass**
die Kolbenverbindung (25) außerhalb der beiden Kammervolumen (21, 22) angeordnet ist.

12. Druckvorrichtung (1) nach einem der vorangehenden Ansprüche, **gekennzeichnet durch**
wenigstens eine Plastifizierungseinheit (16), vorzugsweise wenigstens einen Plastifizierer (16), welche gegenüber der Druckdüse (3) feststehend angeordnet und ausgebildet ist, das fließfähige Material zu erzeugen,
wobei die Plastifizierungseinheit (16) mittels wenigstens eines, vorzugsweise schlauchartigen, Materialführungselements (18), welches ausgebildet ist, das fließfähige Material zu fördern, mit der Druckdüse (3) verbunden ist,
wobei das Materialführungselement (18) vorzugsweise beheizbar ausgebildet ist.

## Claims

1. Printing device (1), preferably a 3D printer (1),
comprising at least one printing nozzle (3) which is designed to eject a flowable material through at least one ejection opening (32) in the direction of a preferably horizontal working surface (11),
wherein the printing nozzle (3) has a fixed printing nozzle frame (30) and a printing nozzle head (31), with the ejection opening (32), which is movable relative to the printing nozzle frame (30), preferably in height (Z),
wherein the printing nozzle (3) is designed to move the printing nozzle head (31) relative to the printing nozzle frame (30), preferably in height (Z), between an open position, in which a flow of the flowable material through the ejection opening (32) is permitted, and a closed position, in which a flow of the flowable material through the ejection opening (32) is not permitted, by means of a drive, preferably by means of a piezoelectric or pneumatic drive,
wherein the ejection opening (32) of the printing nozzle head (31) is spaced further apart from the working surface (11) in the closed position than in the open position,
**characterized in that**
the printing nozzle frame (30) has at least two sealing surfaces (30d) and the printing nozzle head (31) has at least two sealing surfaces (31d),
which are formed in pairs opposite each other such that, in the open position
one pair of sealing surfaces (30d, 31d) is spaced apart from each other and forms a transition region (33) therebetween, through which the flowable material is permitted to flow toward the ejection opening (32), and
the other pair of sealing surfaces (30d, 31d) is sealed together so that the flowable material is not permitted to flow toward an outlet opening (30g; 31g) between the two sealing surfaces (30d, 31d), and
in the closed position
one pair of sealing surfaces (30d, 31d) is sealed together so that the flowable material is not permitted to flow toward the ejection opening (32) between the two sealing surfaces (30d, 31d), and
the other pair of sealing surfaces (30d, 31d) is spaced apart from each other and forms a transition region (33) therebetween, through which the flowable material is permitted to flow toward the outlet opening (30g; 31g).

2. Printing device (1) according to claim 1, **characterized in that**
the two pairs of sealing surfaces (30d, 31d) are each designed to contact each other in the direction of movement in a planar or linear manner, or
the two pairs of sealing surfaces (30d, 31d) are each formed obliquely or at right angles to the direction of movement of the printing nozzle head (31) relative to the printing nozzle frame (30).

3. Printing device (1) according to any of the preceding claims,
**characterized by** at least one receiving space, preferably of a printing head (14), which is designed to receive the flowable material from the outlet opening (30g; 31g) of the printing nozzle (3), and/or
at least one return line, preferably of a printing head (14), which is designed to receive the flowable material from the outlet opening (30g; 31g) of the printing nozzle (3) and to feed it to an inlet opening (30a) of the printing nozzle (3).

4. Printing device (1) according to any of the preceding claims,
**characterized in that** the transitions of the two pairs of sealing surfaces (30d, 31d) are each designed to keep the flow of the flowable material constant.

5. Printing device (1) according to any of the preceding claims,
**characterized in that** the printing nozzle frame (30) and the printing nozzle head (31) have at least substantially the same flow resistance for the flowable material between a transition region (33) formed in the open position between the printing nozzle frame (30) and the printing nozzle head (31), and the outlet opening (30g; 31g), and between a transition region (33) formed in the closed position between the printing nozzle frame (30) and the printing nozzle head (31), and the ejection opening (32).

6. Printing device (1) according to any of the preceding claims,
**characterized in that**
the ejection opening (32) is narrowed.

7. Printing device (1) according to any of the preceding claims,
**characterized by**
at least one metering pump (2) which is designed to receive the flowable material in a manner fed through an inlet opening (20a) and to feed it through an outlet opening (20b) to the printing nozzle (3),
wherein the metering pump (2) has at least a first chamber volume (21) and a second chamber volume (22), which can each be alternatively connected to the inlet opening (20a) or to the outlet opening (20b) to convey the flowable material.

8. Printing device (1) according to claim 7, **characterized in that**
the two chamber volumes (21, 22) are arranged opposite each other in a straight line,
wherein the two chamber volumes (21, 22) face each other and are separated from each other by a valve element (26),
wherein the two chamber volumes (21, 22) face away from each other and are each delimited by a piston (23, 24),
wherein the two pistons (23, 24) are fixedly interconnected another by means of a piston connection (25) in order to be moved together in a translational manner in the same direction.

9. Printing device (1) according to claim 8, **characterized in that**
the two pistons (23, 24) are designed to be moved together in a translational manner in the same direction by means of a piston drive (15) and by means of the pressure of the flowable material.

10. Printing device (1) according to either claim 8 or 9, **characterized in that**
the valve element (26) is designed to be rotated by means of a valve drive (27) perpendicularly to the translational direction of movement of the two pistons (23, 24).

11. Printing device (1) according to any of claims 8 to 10, **characterized in that**
the piston connection (25) is arranged outside the two chamber volumes (21, 22).

12. Printing device (1) according to any of the preceding claims,
**characterized by**
at least one plasticizing unit (16), preferably at least one plasticizer (16), which is arranged to be fixed relative to the printing nozzle (3) and is designed to produce the flowable material,
wherein the plasticizing unit (16) is connected to the printing nozzle (3) by means of at least one preferably tubular material guide element (18) which is designed to convey the flowable material,
wherein the material guide element (18) is preferably designed to be heatable.

## Revendications

1. Dispositif d'impression (1), de préférence une imprimante 3D (1),
comportant au moins une buse d'impression (3) qui est réalisée pour éjecter un matériau fluide à travers au moins une ouverture d'éjection (32) en direction d'une surface de travail (11), de préférence horizontale,
dans lequel la buse d'impression (3) présente
un châssis de buse d'impression (30) fixe et
une tête de buse d'impression (31) pouvant se déplacer par rapport au châssis de buse d'impression (30), de préférence dans la hauteur (Z), et comportant l'ouverture d'éjection (32),
dans lequel la buse d'impression (3) est réalisée pour déplacer la tête de buse d'impression (31) par rapport au châssis de buse d'impression (30), de préférence dans la hauteur (Z), entre
une position d'ouverture dans laquelle l'écoulement du matériau fluide à travers l'ouverture d'éjection (32) est autorisé, et
une position de fermeture dans laquelle l'écoulement du matériau fluide à travers l'ouverture d'éjection (32) n'est pas autorisé,
au moyen d'un entraînement, de préférence au moyen d'un entraînement piézoélectrique ou pneumatique,
dans lequel l'ouverture d'éjection (32) de la tête de buse d'impression (31) est plus éloignée de la surface de travail (11) dans la position de fermeture que dans la position d'ouverture,
**caractérisé en ce que**
le châssis de buse d'impression (30) présente au moins deux surfaces d'étanchéité (30d) et la tête de buse d'impression (31) présente au moins deux surfaces d'étanchéité (31d),
lesquelles sont respectivement réalisées par paires et opposées l'une à l'autre de telle sorte que
dans la position d'ouverture
les surfaces d'étanchéité d'une paire de surfaces d'étanchéité (30d, 31d) sont espacées l'une de l'autre et forment entre elles une zone de transition (33) à travers laquelle l'écoulement du matériau fluide vers l'ouverture d'éjection (32) est autorisé, et
les surfaces d'étanchéité de l'autre paire de surfaces d'étanchéité (30d, 31d) assurent l'étanchéité l'une de l'autre, de sorte que l'écoulement du matériau fluide vers une ouverture de sortie (30g ; 31g) n'est pas autorisé entre les deux surfaces d'étanchéité (30d, 31d), et
dans la position de fermeture
les surfaces d'étanchéité d'une paire de surfaces d'étanchéité (30d, 31d) assurent l'étanchéité l'une de l'autre, de sorte que l'écoulement du matériau fluide vers l'ouverture d'éjection (32) n'est pas autorisé entre les deux surfaces d'étanchéité (30d, 31d), et
les surfaces d'étanchéité de l'autre paire de surfaces d'étanchéité (30d, 31d) sont espacées l'une de l'autre et forment entre elles une zone de transition (33) à travers laquelle l'écoulement du matériau fluide vers l'ouverture de sortie (30g ; 31g) est autorisé.

2. Dispositif d'impression (1) selon la revendication 1, **caractérisé en ce que**
les deux paires de surfaces d'étanchéité (30d, 31d) sont respectivement réalisées pour se toucher à plat ou linéairement dans la direction de déplacement, ou
les deux paires de surfaces d'étanchéité (30d, 31d) sont réalisées respectivement de manière oblique ou à angle droit l'une par rapport à l'autre par rapport à la direction de déplacement de la tête de buse d'impression (31) vis-à-vis du châssis de buse d'impression (30).

3. Dispositif d'impression (1) selon l'une des revendications précédentes,
**caractérisé par**
au moins un espace de réception, de préférence d'une tête d'impression (14), lequel est réalisé pour recevoir le matériau fluide depuis l'ouverture de sortie (30g ; 31g) de la buse d'impression (3), et/ou
au moins un retour, de préférence d'une tête d'impression (14), lequel est réalisé pour recueillir le matériau fluide depuis l'ouverture de sortie (30g ; 31g) de la buse d'impression (3) et pour l'amener à une ouverture d'entrée (30a) de la buse d'impression (3).

4. Dispositif d'impression (1) selon l'une des revendications précédentes,
**caractérisé en ce que**
les transitions des deux paires de surfaces d'étanchéité (30d, 31d) sont réalisées respectivement l'une par rapport à l'autre afin de maintenir constamment l'écoulement du matériau fluide.

5. Dispositif d'impression (1) selon l'une des revendications précédentes,
**caractérisé en ce que** le châssis de buse d'impression (30) et la tête de buse d'impression (31) présentent,
entre une zone de transition (33) se formant entre le châssis de buse d'impression (30) et la tête de buse d'impression (31) dans la position d'ouverture et l'ouverture de sortie (30g ; 31g) et,
entre une zone de transition (33) se formant entre le châssis de buse d'impression (30) et la tête de buse d'impression (31) dans la position de fermeture et l'ouverture d'éjection (32),
au moins sensiblement la même résistance à l'écoulement pour le matériau fluide.

6. Dispositif d'impression (1) selon l'une des revendications précédentes,
**caractérisé en ce que**
l'ouverture d'éjection (32) est réalisée de manière rétrécie.

7. Dispositif d'impression (1) selon l'une des revendications précédentes,
**caractérisé par**
au moins une pompe de dosage (2) qui est réalisée pour récolter le matériau fluide à travers une ouverture d'entrée (20a) et pour l'amener à la buse d'impression (3) à travers une ouverture de sortie (20b),
dans lequel la pompe de dosage (2) présente au moins un premier volume de chambre (21) et un second volume de chambre (22) qui peuvent respectivement être reliés alternativement l'un à l'autre à l'ouverture d'entrée (20a) ou à l'ouverture de sortie (20b) en transportant le matériau fluide.

8. Dispositif d'impression (1) selon la revendication 7, **caractérisé en ce que**
les deux volumes de chambre (21, 22) sont disposés de manière rectiligne l'un en face de l'autre,
dans lequel les deux volumes de chambre (21, 22) sont séparés l'un de l'autre, face à face, par un élément formant soupape (26),
dans lequel les deux volumes de chambre (21, 22) sont délimités, opposés l'un à l'autre, par un piston (23, 24) respectif,
dans lequel les deux pistons (23, 24) sont reliés de manière fixe l'un à l'autre au moyen d'une liaison pour piston (25) afin d'être déplacés conjointement en translation dans la même direction.

9. Dispositif d'impression (1) selon la revendication 8, **caractérisé en ce que**
les deux pistons (23, 24) sont réalisés pour être déplacés conjointement en translation dans la même direction au moyen d'un entraînement pour piston (15) et au moyen de la pression du matériau fluide.

10. Dispositif d'impression (1) selon la revendication 8 ou 9,
**caractérisé en ce que**
l'élément formant soupape (26) est réalisé pour être tourné perpendiculairement à la direction de déplacement en translation des deux pistons (23, 24) au moyen d'un entraînement de soupape (27).

11. Dispositif d'impression (1) selon l'une des revendications 8 à 10,
**caractérisé en ce que**
la liaison pour piston (25) est disposée à l'extérieur des deux volumes de chambre (21, 22).

12. Dispositif d'impression (1) selon l'une des revendications précédentes,
**caractérisé par**
au moins une unité de plastification (16), de préférence au moins un plastificateur (16), qui est disposée de manière fixe par rapport à la buse d'impression (3) et qui est réalisée pour produire le matériau fluide,
dans lequel l'unité de plastification (16) est reliée à la buse d'impression (3) au moyen d'au moins un élément de guidage de matériau (18), de préférence en forme de tuyau, qui est réalisé pour transporter le matériau fluide,
dans lequel l'élément de guidage de matériau (18) est de préférence réalisé de manière à pouvoir être chauffé.
